# EUROPEAN PATENT SPECIFICATION

(11) **EP 1 159 696 B1**
(45) Date of publication and mention of the grant of the patent: **13.11.2002**
(21) Application number: 00902812.7
(22) Date of filing: 14.02.2000
(51) Int. Cl.: G06F 17/60, G06F 17/30, G06F 9/46

(54) **TRANSACTION SYSTEM**
TRANSAKTIONSSYSTEM
SYSTEME DE TRANSACTION

(30) Priority: 12.02.1999 GB 9903314
(43) Date of publication of application: 05.12.2001
(73) Proprietor: Unipower Solutions Europe Limited, London EC4M 7LH (GB)
(72) Inventor: HOUBART, Hanafi, Rickmansworth, Herts. WD3 2ED (GB)
(74) Representative: Loveless, Ian Mark
(86) International application number: GB0000487
(87) International publication number: WO00048100

(56) References cited:
- US-A- 5 649 099
- WURMAN P. R., WALSH W. E., WELLMAN M. P., O'MALLEY K. A.: "A CONTROL ARCHITECTURE FOR FLEXIBLE INTERNET AUCTION SERVERS" UNIVERSITY OF MICHIGAN, ARTIFICIAL INTELLIGENCE LABORATORY, [Online] 6 February 1999 (1999-02-06), pages 1-12, XP002145391 Retrieved from the Internet: <URL:http://ai.eecs.umich.edu/people/wew/P apers/AB_Architecture2.ps.Z> [retrieved on 2000-08-09]
- WURMAN P. R., WELLMAN M. P., WALSH W. E.: "THE MICHIGAN INTERNET AUCTIONBOT: A CONFIGURABLE AUCTION SERVER FOR HUMAN AND SOFTWARE AGENTS" PROCEEDINGS OF THE SECOND INTERNATIONAL CONFERENCE ON AUTONOMOUS AGENTS (AGENTS-98), MINNEAPOLIS, MN, USA, [Online] May 1998 (1998-05), pages 301-308, XP002145392 Retrieved from the Internet: <URL:ftp://ftp.eecs.umich.edu/people/wellm an/agents98wurman.ps.Z> [retrieved on 2000-08-09]
- "EFFECTIVE LOCKING SCHEME FOR REAL-TIME APPLICATIONS" IBM TECHNICAL DISCLOSURE BULLETIN, US, IBM CORP., NEW YORK, vol. 36, no. 6B, 1 June 1993 (1993-06-01), pages 319-320, XP000377398 ISSN: 0018-8689
- M. Franklin, Data in your Face: Push Technology in Perspective, ACM Sigmod 98, pp. 516-519
- S. Acharya, Balancing Push and Pull for Data Broadcast, ACM Sigmod 97, pp. 183-194
- Silvia Hollfelder, Karl Aberer, An Admission Control Framework for Applications with Variable Consumption Rates in Client-Pull Architectures, GMD Report N. 8, ISSN 1435-2702, April 1998

## Description

### Field Of The Invention

The present invention relates to a transaction system, and in particular to a transaction system operating across the Internet or a network running Internet Protocol.

### Background Of The Invention

The Internet has developed significantly in recent years in the areas-of advertising and E-commerce. Nonetheless, the fundamental protocols used, in particular on the World Wide Web, have remained unchanged.

Internet systems comprise Internet Servers (IS), Internet User-Agents (IUA) and Internet data transfer protocols (Protocols). An Internet User Agent is a client (an application program) which initiates a request on an Internet system. Typical examples are web browsers, editors and other end user tools. The Internet Servers accept requests from User Agents and provide responses. Internet Servers are proprietary software systems running on server computers that deliver data to IUAs, using a Protocol. The best known Internet Protocol is HTTP (Hypertext Transfer Protocol). The IS responds to requests from the IUA to transmit data. The IS cannot, under the terms of the protocol, initiate a transfer to an IUA without the IUA first issuing a request. The Data transferred is any value-entity capable of representation by computer.

Hypertext Transfer Protocol (HTTP) is an application level protocol which has been used on the World Wide Web since 1990, and is based on a request/ response paradigm. A client (an application program) establishes a connection with a server and sends a request to the server which includes a request method, request modifiers, client information and body content. The server sends a response with a status line, including the message's protocol, and a message containing server information and possible body content. The simple request/ response paradigm may also be implemented through one or more intermediaries such as proxies, gateways or tunnels. HTTP is within the knowledge of the skilled person. HTTP requests run on "threads" at a server and in known systems are run in the order that they arrive at the server. HTTP requests thus comprise: Routing Information - The URL; Application Information - URL + HTTP Header; and Optional DATA Body consisting of arbitrary binary or text data of predetermined length. HTTP responses comprise: Application Information - HTTP Header; and Optional DATA Body consisting of arbitrary binary data or text or Mark-Up Language.

The basic request/ response paradigm is of importance as a protective measure to prevent a user unknowingly receiving data from a server to which the user is connected. If this paradigm were not followed, it would be possible for a server to send unrequested data, which could include malicious content, for example. The request/ response paradigm does have limitations, however, when considering a commercial transaction.

First, a user may wish to receive information such as HTML pages which have not been specifically requested. These could be advertising pages or directed information. Second, the user may require up to date information, but does not wish to manually initiate a frequent and an endless series of requests to keep up to date.

To provide updated information to a user, developments have been made to the way in which HTML and HTTP operate. Such developments in various forms are known as "push" technology.

In one form of push technology an HTML request from a user to a server is never completely fulfilled. Data is continuously sent so that any alterations to the information made while the response is in progress are incorporated in the data transferred. Whilst this approach does provide up to date information, there is a big disadvantage in that a connection is kept continuously open which uses unnecessary bandwidth.

In a second form of push technology, regular updates are performed by the user frequently sending requests, for example every 2 or 3 seconds, and the server providing a response. The data at the user is thereby nearly up to date. An implementation of this approach is known in Java which has the facility to poll at regular intervals.

In either of the above known push technology solutions there are problems. In the first approach a significant burden is placed on the bandwidth required in a system. In the second approach, the information seen by users of the system is not guaranteed to be up to date.

To overcome problems with such push technology, developments to the HTTP protocol have been proposed, but not yet implemented. Such changes are to implement some form of event notification so that changes in data viewed at a plurality of clients are notified to those clients. Web DAV and ENP are two such protocols and both require additional commands to be added to the HTTP protocol. These two protocols allow a user to subscribe to a notification that unstructured data such as Web pages have changed. The server provides a simple notification to a user that a data change has been made. GENA is a further protocol proposal which operates in a similar manner.

A second approach to developing HTTP is to integrate a server with each Web browser and a client with each server. This allows a server to initiate a request to the browser (with associated server). This protocol is undesirable, however, because the protective measure of the basic request/response paradigun is removed allowing servers to send unrequested data to browsers.

Sample systems of an online data exchange, among others, for online auctions can be found in the following two documents :

WURMAN P. R. et al. describe in 'A CONTROL ARCHITECTURE FOR FLEXIBLE INTERNET AUCTION SERVERS' UNIVERSITY OF MICHIGAN, ARTIFICIAL INTELLIGENCE LABORATORY, 6 February 1999, pages 1-12, an internet auction system where different time indicators are associated with a request (auction, bid) stored in an internal database of the server. While WURMAN uses time indicators, they have a different purpose as in the present application.

M. Franklin describes in the paper "Data in your Face: Push Technology in Perspective", published by ACM Sigmod 98, pp. 516-519, a comparison of pull- and push-based data dissemination between server and clients. However, Franklin fails to teach a specific time indicator as in the present application.

### Summary Of The Invention

We have appreciated problems with known transaction systems. A particular problem is how to provide up to date information in a system which works using a request/response protocol. In the existing systems discussed above, the "newness" of any data is only as up to data as the last pull request. This is particularly a problem with E- commerce systems running on the Internet. We have appreciated that such systems should provide a view of information to multiple users which is as up to date as possible. We have also appreciated problems with online ordering or bidding systems in providing distribution and integrity of information to multiple users of a system.
In particular, transactions should be completed in a secure and provable manner, and treating all users fairly.

We have further appreciated that request/response systems are desirable because of the security provided in preventing uninvited data being transferred, but that existing protocols such as HTTP do not allow shared views of information to be up-to-date. We have appreciated the need for providing, in particular, an improved system which provides up-to-date information delivery without changing existing protocols.

In a broad aspect, the invention provides a system and method of processing requests in a request/response system in which requests are analysed and prioritised to provide up to date information to a plurality of clients as soon as the data requested has changed.

In particular, there is provided a system for processing requests in a request- response client-server computer network in which a plurality of clients communicate with a server by issuing requests to read or write data according to claim 1.

The system according to the invention can thus provide a response to a request as soon as it is received (in the usual time frame), or can defer providing a response until the request reaches an actionable state. Various criteria for when the request reaches an actionable state can be applied in embodiments of the invention, and can vary from one implementation to another. The requesting client does not need to store or analyse whether an immediate response is required as this function is supplied by the system according to the invention. Accordingly, no change is required to existing request-response protocols such as HTTP, and there is no risk that unrequested information is "pushed" to the client. Nonetheless, a system embodying the invention provides an indication to provide a response when appropriate ensuring, for data read requests, that each client receives data at an appropriate time. This is in contrast to known systems which simply provide responses when requested with the problems noted above.

In particular, in the embodiment the request analyser comprises a request queue store for storing requests in order of arrival of requests at the request receiver, and furthermore the request analyser comprises a request retriever for retrieving requests from the request queue store in order of arrival at the request receiver and for passing the requests so retrieved to the request qualifier.

The system thus provides fairness in dealing with requests as they arrive at the request receiver. Subsequent handling of requests will, however, depend upon their content as determined by the request analyser and request qualifier. In the embodiment, the request analyser comprises means for determining whether the request is to read or write data. This first analysis allows the system to determine how each request should be handled, and also to alter how subsequent requests are dealt with.

Requests to the system may either be to read or write data. To avoid contention, therefore, the embodiment provides a controller for controlling operation of the request analyser, request qualifier, state indicator and response indicator, and for suspending operation of each, if the request analyser determines that the next request is to write data, until the data has been written. This prevents subsequent requests to read data occurring until a change in data has been made.

We have appreciated the need to determine whether a response to a read request is required because the requesting client may already have the most up-to-date data view. Accordingly, the embodiment provides means for extracting from each request a time indicator indicative of when the requesting client last received a response from the server. In particular the time indicator is a time stamp.

An implementation of an embodiment of the invention provides a system, particularly an Internet system, for sharing multiple synchronous views of computer data between Internet servers and Internet user-agents. The embodiment is suited to implementations such as Internet commerce and enable multiple vendors and multiple emptors to engage in synchronous Internet communication using structured transactions. This is a significant departure from existing Internet technologies.

### Description Of A Preferred Embodiment

An embodiment of the invention will now be described, by way of example only, and with reference to the accompanying figures, in which:
- Figure 1: is a diagram of the detailed functional components of a system embodying the invention;
- Figure 1A: is a diagram of the key features of the functional components of a system embodying the invention;
- Figure 2: is a diagram of the broad functional components of a system embodying the invention;
- Figure 3: is a representation of a thread ring;
- Figure 4: is a representation of three thread rings;
- Figure 5: is a representation of a queue thread ring;
- Figure 6: is a representation of a hold thread ring;
- Figure 7: is a representation of a change thread ring;
- Figure 8: is a representation of the functions performed on receiving a request;
- Figure 9: is a representation of the functions performed on qualifying a request;
- Figure 10: is a representation of the functions performed on reading or writing data; and
- Figure 11: is a representation of the function performed on providing a response.

The embodiment of the invention will be described as a transaction system. A transaction is an event or series of events which cause a change in data stored at a client or a server. The embodiment described could be used to implement a variety of systems such as chat lines, auctions and share dealing transactions. Other implementations may also be possible. The embodiment will also be described in terms of a system applicable to the Internet, or other network running Internet Protocol. However, the invention is applicable to other types of computer network. A complete implementation will involve a plurality of clients and servers, and the present description is limited to a single client and server for ease of understanding.

The preferred implementation of the system embodying the invention is an auction system using a pure HTML interface which avoids the needs for client side scripts, applets, DHTML or XML. Accordingly, this system can be accessed using existing HTML browsers. The timeliness of information distribution of data provided by an embodying system allows the auction implementation to host near-time auctions. It is believed that this will render existing blind auction technology as obsolete.

Two categories of implementation are possible:
unstructured data (such as Web pages); structured data (such as databases). These two implementations are within the scope of the invention, and will be described.

The overall strategy adopted in the embodiment of the invention is that data such as a local database is stored at each client and mirrors a database stored at a server to which each user may be connected. The embodiment ensures integrity of information between each client database and the server database so that all users have the same view of common data. The purpose of the local database is to allow access to the data when offline.

The client computer has a persistent or volatile copy of a master computer data source which is referenced on a client computer. If volatile, the data is held only during the term of interconnection between the Internet User Agent (IUA) and the Internet Server (IS). If persistent, the data is held in a copy database located at the IUA computer and maintained by the embodying system across one or more Internet sessions. The system maintains transactional integrity between all such data sources in real time execution, or across sessions.

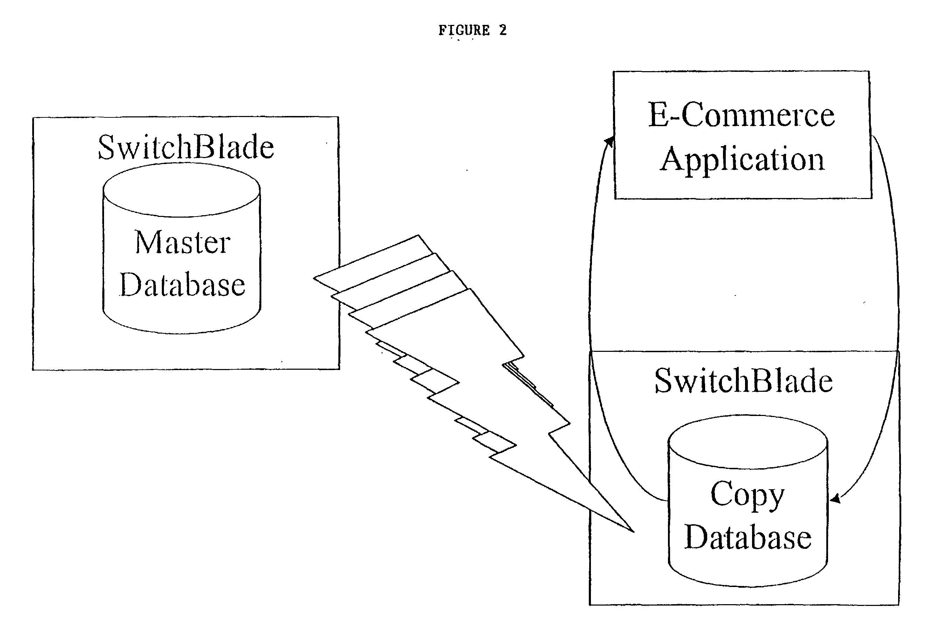

An E-commerce implementation of an embodiment of the invention stores at a clients computer a local data source of commercial information, such as auction data, which is an updated copy of a master source. The E-commerce application interrogates the local data source as if it were the master source. It is important, therefore, that the local source is kept up to date. This is schematically shown in Figure 2 in which the embodiment is known as "Switchblade".

To assist understanding of the embodiment of the invention, an implementation of the embodiment of the invention to an auction system will be discussed. In the auction system, client Internet user agents store auction data in a local cache database which mirrors the auction data stored at a auction owner's database. Users submit bids to the auction owner resulting in data being updated in the auction owner's database. To maintain integrity, the user's local cache database is updated as are other user's databases so that a consistent view of the ongoing auction is shared between all participants. Other implementations will be discussed later.

The terminology used above in relation to prior Internet Systems will be used when discussing the present embodiment. As an overview, the embodiment is a simulated push system which allows an IUA to issue a data-generic "Push Invitation" to the IS which the IS may optionally decline to fulfil, fulfil immediately, or fulfil after a predetermined delay. The use of the delayed response allows the IUA to have a long polling periodicity, but the IS can provide near immediate responses when a Push situation arises. This permits many IUAs to use an IS and have a high degree of contemporaneity in the shared data view between them.

The embodiment uses a novel synchronising mechanism at the IS referred to as a Switch which arbitrates pull requests from a plurality of IUAs, responding when appropriate by pushing a response to the IUAs initial invitation. Using this system, many IUAs have a synchronous, contemporaneous view of data shared between them, which may be changed by any one of them. The change is then reflected to all other IUAs with a shared data view. The mechanism may operate in real time and across a plurality of Internet sessions between IUAs and ISs.

In the HTTP implementation, a received HTTP request will be handled by at least one of the following functions:
- Qualifier
- Requalifier
- Immediate Response
- Held Response
- Change Response
- Default No response

The embodiment of the invention provides the functions of the immediate response, held response, change response and default no response by the interaction of 3 program units called thread rings under the control of a ring controller. The qualifier and requalifier functions are provided by the interaction of these 3 program units with functions provided by a specific implementation of the embodiment known as a handler. The operations of the handler will vary from one implementation to another depending on the nature of the system and data being handled e.g. a chat system, broking system and voting system will each have distinct functions provided by the handler. Those functions common to all such implementations are described in the present embodiment.

These are discussed in greater detail later. There are four types of HTTP request:
- Immediate Read HRQs, which may be satisfied by an immediate HRS (Queued HRQs)
- Immediate Write HRQs which may be satisfied by an immediate HRS (Change HRQs)
- Deferred HRQs which may wait for a change in the Shared Data View before optionally issuing an HRS (Held HRQs)
- HRQs which generate no Response (Discarded HRQs).

Thus, for the avoidance of doubt, it is noted that a request can be to read or write data.

The deferred request is a key element of the system embodying the invention. By using a delay, requests may be made infrequently whilst maintaining information distribution that is up to date. A predetermined delay or Resistant Time-Out may be used to limit the term of the delay. On making a request, if the Internet User Agent (IUA) data view is concurrent with the Internet Server (IS) data view, the IS will wait until either: (1) A Change occurs in the data view; or (2) The time-out expires. This allows very long polling times when no change occurs, with very short response times when a change does occur.

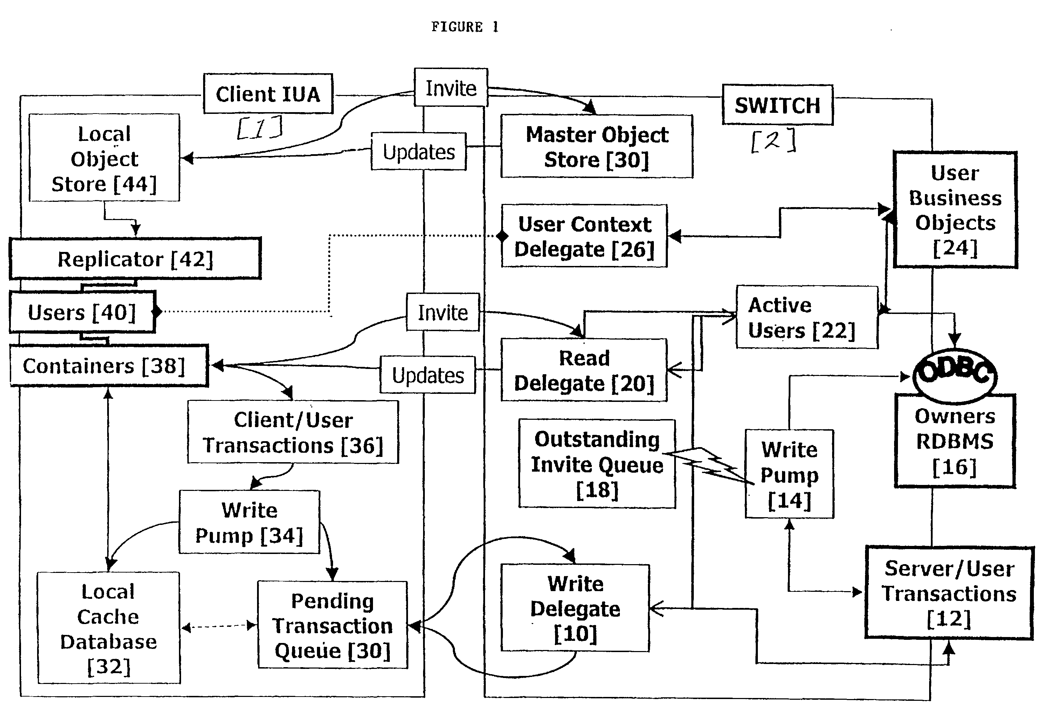

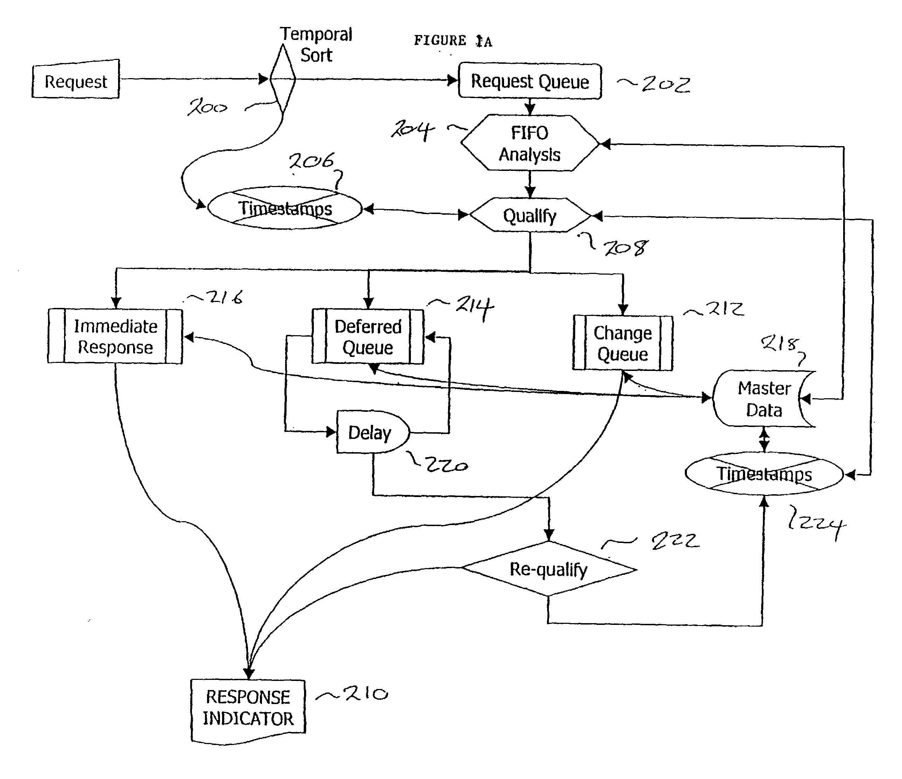

The functional components of the embodiment of the invention are shown in figure 1. A client computer such as a known PC comprising at least a processor, storage and display is connected to a network such as the Internet through the functional components shown as the client IUA 1 (Internet User Agent). In a non-Internet embodiment this is referred to simply as a client; the IUA is one type of client. The client IUA 1 could be a Web browser, for example, which is running on the client computer. The network itself will not be described as an example is the Internet which is within the common general knowledge of the skilled person. The client IUA 1 is an application program which may issue HTTP requests to the server through the switch 2.

The interactaction of the client IUA 1 with a server computer is through the system embodying the invention comprising functional components shown as a switch 2. The switch 2 comprises data and program units which provide an interface to"the server computer. The switch could itself be a set of program units running on the server computer which extends the functionality of the server to handle requests in an improved manner, or could be provided as a separate interface. The server computer includes a store in which data is stored, manipulated, updated and provided to the client computer through the switch 2 and client IUA 1.

The broad functions of an embodying system in the form of the switch 2 will now be described, with reference to figure 1 and 1A, before describing the architecture in detail shown in figure 1.

The server receives HTTP requests via the switch 2. HTTP requests run on "threads" at the server. A thread is a unit of execution run by the server processor. In known systems, threads are simply run in the order that the request to which they relate arrive at the server. In a single processor, the threads are run one at a time, with the processor periodically diverted between threads to progress each in turn. In a multi-processor system, the threads are run in parallel.

In contrast to the known method of handling threads, the switch 2 has three thread rings each of which is a separate program unit. The three thread rings have a higher priority than incoming HTTP requests and so control the way in which requests are handled. An HTTP request is received at the switch by a receiver 200 having a request queue 202 implemented by a Queue thread ring and analysed by an analyser 204, 206 to retrieve information from the request. The Queue ring ensures that all requests are treated equally by keeping them in time of arrival priority order. On analysis of the HTTP request a qualifier 208 is used to qualify the request. If it is determined that the transaction will change data in the server database 218 and associated time stamps 224, it is passed to a change queue 212 and response indicator 210 in the form of the write delegate 10 which is an instance of the change ring. The change ring suspends operation of the other two thread rings until the appropriate transaction has been completed at the server database. If the HTTP request is for refreshed data, and the client already has the current view, then the request is passed to a held request store 214 in the form of the read delegate 20 which is an instance of the hold ring. A state indicator comprising a delay 220 invokes the hold ring to requalify 222 requests periodically with reference to a handler, and when instructed to do so, to determine when a response is appropriate. When appropriate, the hold ring notifies the queue ring which invokes the response indicator 210 in the form of a read delegate to read data and provide a response. If an immediate response 216 can be provided, this is done by the read delegate 20.

The three rings operate together to ensure that any client receives up to date information, and that changes occurring to the server data as a result of any client transaction are published to other clients.

A response indicator in the form of a Read Delegate [20] is an instance of a software module running under the Queue Thread Ring operating on an HRQ-Thread entity. The Read Delegate is invoked if Qualification by a handler of the HRQ-Thread indicates that an update can be contemporaneously supplied in response. This Response is generated by the Read Delegate using calls to the underlying Owner's Master RDBMS. HRQ-Threads that Qualify indicating the Client-view is contemporaneous, are transferred to the Hold Ring.

The Outstanding Invite Queue [18] is a software module running under the control of the Hold Thread Ring.
The Hold ring periodically Re-qualifies with reference to a handler outstanding HRQ-Threads in responses to changes in the underlying data induced in the Change Ring. The Write Delegate is a software module running under the control of the Change Thread Ring. When a Write Request is fulfilled by the Write Delegate, Write Pump [14], a Requalify-Now signal is sent to the Hold Ring, causing all suspended requests to be Re-qualified. If Re-qualification indicates a response is due, the Hold Ring will re-invoke the Read Delegate to create that response. If no data change occurs within the resistant timeout, the Outstanding Invite Queue generates a return response indicating no change in the data set has occurred.

A Client will always immediately resubmit the Invite for further (Re)Qualification, regardless of outcome. This is important because the result is that each client will always have a request pending at the switch and thus will always receive responses to keep the data view up-to-date.

The operation of the three rings is to delay sending a response to a request until appropriate analysis and action is taken to ensure all clients will receive current information. The client application may include an optional mechanism to ignore the failure effect of a delay extending beyond the typical duration or time out after which a switch response is normally assumed to have failed. This ignored failure is termed "resistant timeout". The resistant timeout allows a client to continue requesting data, even though the server may not have responded to the client's request. If the optional resistant time out is not present, the timeout delay defaults to the normal timeout of Internet specifications.

The switch 2 analyses requests to determine the appropriate action. If the analysis of the request reveals that the data has changed since the last request, an immediate response may be sent to the client. A request which requires a change in the data initiates a change response which is handled by the write delegate 10, discussed above, requiring that the data is changed and a change response is made.

If it is determined that the request does not affect the current server data, the request is held while the switch waits for a state change in its view of the data before responding. This is a held request. At the end of a predetermined period, if it is determined that the client already has the most up to date data (by analysis of the time of the last update and the time of the request) then a null response is sent to the client. If the data has changed while the request is held, however, an immediate response may be made to the held request.

A particular handler will not be described in detail in the present embodiment because the specific nature of the handler varies from implementation to implementation. However, the handler provides the basic functions of analysing requests and, with reference to the particular implementation, instructing the system embodying the invention to handle responses. In the present embodiment, the core handler functions are provided by the three thread rings.

The architecture of a system embodying the invention will now be described in detail referring again to figure 1.

The client IUA 1 has three main components which interact with a client application: replicator 42, users 40 and containers 38. The components may be implemented using HTMLK 3.2 (or better), in which case the application is an enhanced standard Web page. An alternative implementation could use object components built using Microsoft™ COM (component object model) or Corba (common object request brokerage).

The users component 40 maintains information on each user such as credit card information or other user related data. The replicator component 42 is used to establish a local cache and is used at any time during operation of the system. The containers component 38 provides an application level view of data fields stored in the local database 32. Together these three components interact with the client application requiring services from the switch 2.

The local object store 44 is a full or partial copy of a master object store 30 stored at the switch 2. The view of this copy is also a shared view, and so is updated in the same manner as the local code database 32. The purpose of the local object store 44 is to provide configuration information to the particular application being run by the user. The local object store is stored using any of standard ODBC Jet/ ISAM data services, file or memory storage at the local client computer, and contains two tables. These are: a node ID list (NID); and a value ID list (VID). These two tables form an aggregate data service providing Tagged Information arranged in a container/ value hierarchical tree. The local object store 44 provides information for the following purposes: identifying components, their versions and download sources; applications, their versions and download sources; user and other client persistent information; public data transfer areas between bespoke applications; private data transfer areas; all other system configuration data pertinent to the client; and the definition of containers in the local cache database 32.

The local cache database 32 mirrors the owners database 16 at the server and is a structured or unstructured repository of the commercial data held at the client IUA 1. In the auction example given, the database 32 contains price, item seller and other commercial data relevant to the auction. It may be stored using any of standard ODBC Jet/ ISAM data services, file or memory storage at the client computer. Data is considered to be structured if it has a single unique index (PK) and adheres to the Third Normal Form of relational data theory or better. All other data is termed unstructured. The view of this data is also a shared view. Direct access to this data by the client software is prohibited. This is an important feature to maintain integrity between the owners database 16 and the local cache database 32. This is a second aspect of the invention described later.

The contents of the local cache database 32 is made available to the user application through a data access API named containers 38. This interface is an object component that implements an object collection of type container. A container implements a per-PK scrollable instance data rowset of values indexed by the PK. The container API is proprietary level precursor interface to a higher level standard database interface such as ODBC or OLE DB. The data viewed is stored in the local cache database 32 and the structure of the data is stored in the local object store 44.

The local object store 44 allows the use of an object component called the replicator 42 which establishes a switch context for the local object store 44 and the local cache database 32. The switch context contains the Internet address of the master switch, a specific application name that is being recovered from the local object store 44 and an application transaction time stamp (ATxTS) for that application as last recorded in the local object store 44.

The replicator 42 component invokes zero or more user object components. These user components use local object store 44 or alternate pre-existent proprietary Internet authentication to create a user context under which a commercial transaction will occur (for example Bank a/c number, etc.). The replicator component uses the user-context to retrieve from the master or update pre-existing rowsets of data held in the local cache database 32 and to create the subsidiary object component container views of that data. The local cache database 32 and the local object store 44 could use the same persistent storage.

The local object store 44 communicates with the master object store 30 using HTTP protocol requests for any updates using the queue thread ring of the read delegate 20 (described in detail later). If there have been any changes to the master object store 30 data, an immediate response notifies the local object store 44 that an update has occurred. Changes to the master object store 30 and local object store are implemented in the same manner as updates for the local cache database described in detail later. The master object store is implemented using Microsoft™ SQL server 6.5 or any transactional relational database capable of object component transactions.

The Container Module [38] provides the only interface between the data stored in the Client and the Application using that data. All data reads are satisfied either:
By a read from the LCD [32]
By a read from the LOS [44]

Whenever a Client goes online and connects with a Server, the updating of the local data view is automatic. A Client may determine, when and if, a Client attempts server connection. All data writes are satisfied either:
By a stored non-committed offline Transaction at the Client in the Pending Transaction Queue [30]; or By an online Transacted write through the SwitchBlade server Write Delegate [10].

When Offline, changes in the shared data view cannot be guaranteed until finally committed to the server. When Online, changes are Transacted with the Server in Internet real-time. In all Write situations, a successful Write will result in an update packet being released to the Client in the normal way. This update packet, and this packet alone, modifies either the LCD [32] or LOS [44] with a permanent change of data. No action initiated within the client can permanently modify a copy of the shared data view. This shared view is always exerted by the server.

An overview of the process by which the local cache database is kept up to date will now be given with reference to figure 1, followed by a more detailed description with reference to the remaining figures.

The local cache database 32 is kept up to date by interaction of the user transaction component 36, the write pump 34 and the pending transaction queue 30 and data is accessed via the containers component 38 as previously described. If a user action results in a data change to either the local object store 44 or the local cache database 32 the user transaction object component 36 arbitrates the attempt to write data to either data store. The user transaction component 36 in turn invokes the write pump 34 to generate a tokenised transaction which is held pending in the pending transaction queue 30 object component. These pending transactions are resolved at the next Internet connection with the switch.

When the next Internet connection is available, the pending transaction queue 30 connects with the write delegate 10 on the switch. This is implemented using the change thread ring previously described. The queue and hold rings are suspended for the duration of the write delegate save.

At this stage, a mirror server side user transaction 12 is created to decompose the tokenised transaction into a user qualified data write. The write pump 14 at the server uses proprietary third-party APIs (for example ODBC) to access the commercial systems owners relational database 16. If the write to the owners relational database 16 is successful, this is notified to the client's pending transaction queue 30 which either: (1) commits the change to the local cache database 32; or (2) signals to the write pump to wait for an incoming update response from the read delegate 20 which will update the local cache database 32.

Figures 2 to 11 show the processes involved in transactions conducted on the system. This is shown by the program units shown as thread rings, discussed in the following section. These three rings process all HTTP requests made to the server.

To allow requests to be prioritised, the system maintains a per-Application Time-Stamp that represents the time at the Switch 2 at which a state of change in a master data source was last accepted. This is termed the Application Transaction Time-Stamp or ATxTS. The ATxTS serves as an indicator between Clients and their Switch as to whether a state change in shared data has occurred. The ATxTS may be supplemented on a per-Table or per-Rowset basis by a integrally incremented Revision count. The ATxTS is known both by Client and Switch, except in initial state when the ATxTS is defaulted to Time Zero.

The ATxTS is a high-resolution time at which the server-side data source last processed a state change. This value is copied to the Client IUA whenever an update is transmitted to that Client IUA, allowing it to know whether or not it has a valid, contemporaneous view of the shared data. This value may be persisted at the Client IUA, in which case it may be persisted for very long periods of time and across Internet connection sessions. This value may be volatile at the Client IUA, in which case the Client IUA will initiate transactions with the server-side at Time Zero and a new ATxTS provided for the duration of that connection session only.

The transaction time stamp will now be described in detail. The transaction timestamp or TxTs is a server generated date-and-time value, accurate to 1ms, of the last known good state of change in the shared data view. For unstructured file-based data this value is the filing system date-and-time of last modification. For structured data it is the date and time of the last known transaction on that data.

A Transaction is a state of change, guaranteed by the structured data store provider to fulfil the widely-known industry standard of ACID Transactions: A: Atomic - all actions on the data succeed as single unit or none do. C: Consistent - all similar actions on the data succeed similarly. I: Isolated - Failure has no side effects D: Durable - The data source is failure resistant. All commercial RDBMS provide ACID transactions and roll-backs.

TxTs's are applied according to a structured hierarchy in the server architecture -TxTs's are applied to the lowest level of unique identity within the data, typically the unique key (Third Normal Form) of a relational database TABLE. The most recent Unique Identity TxTs within a data Table is the TxTs of that Table. The most recent Table TxTs of any data Table is the TxTs for that Database. The most recent Database TxTs of any database is the TxTs for that Application. The most recent Application TxTs for an application is the System Global Transaction Timestamp.

The most recent TxTs in the data hierarchy is always the global system transaction timestamp. Transaction time stamps are used in granular descending order to determine whether or not an incoming request for updating (an Invitation) should be serviced immediately or should be deferred for the duration of the resistant time out.

If an IUA is requesting update with a valid concurrent system global TxTs, no further qualification of that IUA request is need, and so on, through the data hierarchy, to whatever point of exhaustion is specified by the application.

In the embodiment, the TxTs is a double precision floating point value in 8 bytes of storage, specifying absolute date and time UCT/GMT with a precision of 1 millisecond or shorter. All time stamps are generated by the server and sent to the client. The server and the server alone determines the current value of time in the system.

When an IUA client connects for the first time with a server, the client assumes a timestamp of value 0.0 (Zero Timestamp). In response to this the server responds by first populating the client end Local Object Store [44] with a good contemporaneous copy of the Master Object Store [30] as appropriate for that User Context. The Local Cache Database [32] is similarly populated and may contain individually Timestamped rows of data. Copies of system level Time stamps are recorded in the Client-end Object Store [44]. These copies are retained are for further communication with the server, in the same or later connection session. A list of active users 22 is maintained for the purpose of checking entitlement. A user business objects component 24 is third party software for identifying user accounts.

Any subsequent request sent by that Client to that server will be Qualified for Hold in a resistant timeout, until such time that a valid incoming Change request alters the shared data and modifies a Timestamp within that calling client's view. Once a state of Change has occurred, an update packet modifying the Database[32] or LOS[44] or both, and incrementing the Client Timestamp will be returned by the server.

All Qualification and Re-qualification of requests (HRQs) will involve Timestamp comparison. Specific Applications may also apply additional qualification criteria.

In the present embodying system, therefore, an HRQ contains:
A valid ATxTS or
   - A valid Incremental Revision Number or
   - A Time Zero or Revision Zero Value
An indicator to show whether the HRQ is requesting:
   - A Read of Data from the master source or
   - A Write of Data to the master source Either:
   - An Application Identification Value or
   - No identifier, indicating a Generic Read or Write

In the chosen implementation, the full HTTP request has:
- A Mandatory valid ATxTS/Revision/Zero Field (txts)
- An Optional Application Name (hdlr)
- An Optional HRQ Type Name (type)
- An Optional Globally Unique HRQ Name (guid)
- A Mandatory Read/Write Flag (flags)
- An Optional Data Body (info)

In HTML all this data is packed into a URL: http://<address part>&txts=xx&flags=xx&info=xx etc., In Software use the info body is sent as a binary or text extension to the HTTP packet body.

As previously discussed, HTTP requests (HRQ) are processed by units of execution called threads. An HRQ Handler Task (HRQ-Thread) is a computer processing unit of execution or Thread that runs on the IS in response to an HRQ. The HRQ-Thread may be suspended or running at any point. When Running, the HRQ is serviced resulting in an HTTP response (HRS). When suspended, the IUA is in a state of "waiting" for a response from the IS. The HRQ Task provides software to enable an HRS.

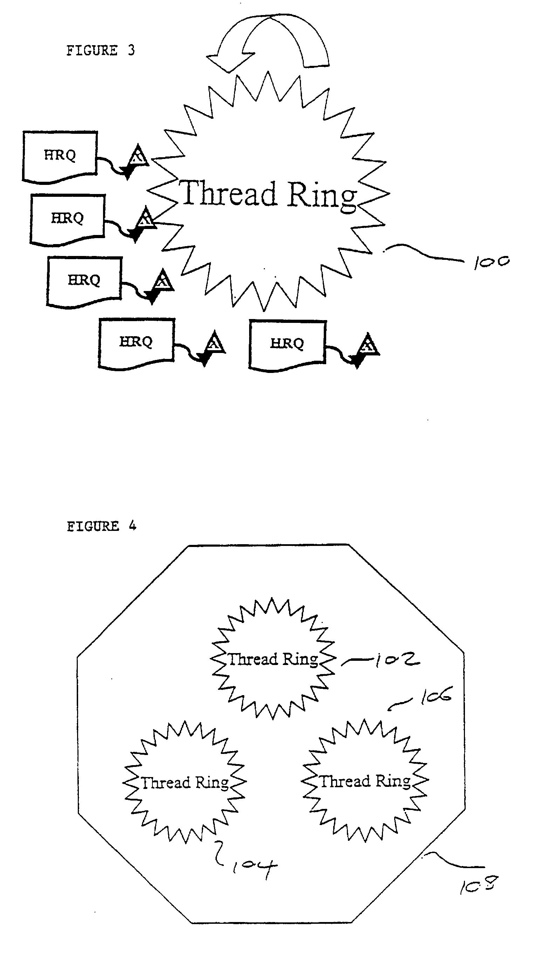

In the present system an HTTP request is handled by three thread rings under the control of a ring controller as shown in figure 3. The functions of these three rings are implemented by the read delegate 20, the outstanding invite queue 18 and the write delegate 10 shown in figure 1.

Upon arrival at an Internet Server, the server receives the incoming data from the Internet connection and creates a suspended HRQ-Thread from the HTTP Header, URL and data body, and suspends response to the IUA.

As shown in figure 3, a Thread Ring 100 is a Task or unit of execution that manipulates HRQ-Threads. A Thread Ring has: a collection of zero or more HRQ-Threads upon which it exerts control; and a mechanism to disable its execution, and thereby suspend its activity and the HRQ-Threads in its control. All Thread Rings are in turn controlled by a Ring Controller 108. This is a Task or unit of execution that has: a Collection of Zero or more Thread Rings; and a mechanism to suspend its execution, and thereby suspend some or all Thread Rings in its control.

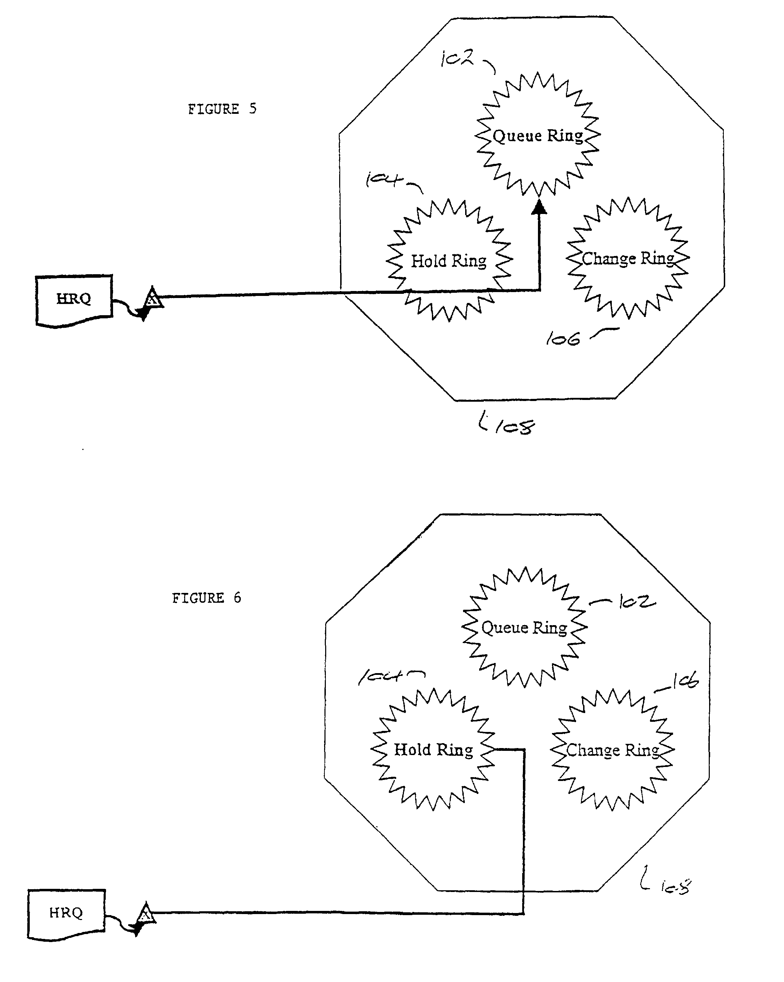

The ring 100 shown in figure 3 has 5 HRQ-Threads attached all in a state of suspension. No HRQ will generate an HRS until its owning thread ring activates its HRQ-Thread. HRQ-Threads are stored in ATxTS or Revision order to ensure correct synchrony in time and processed by the Thread-Ring's Task in round-robin order. The ring controller 108 is symbolised in figure 4 and is shown controlling three thread rings 102, 104, 106.

As shown in figure 5, the first thread ring controls synchrony between incoming HRQ-Threads. It is called the queue ring 102 and stores all HRQ-Threads in time of arrival order. The second Thread Ring (figure 6) controls HRQ-Threads which are in a Held or suspended state, awaiting data change or time-out. It is called The Hold Ring 104 and stores suspended HQ-Threads in Time-Stamp order.

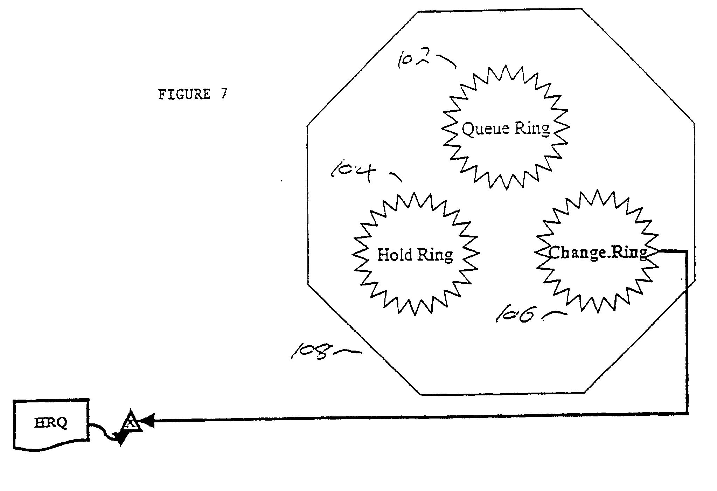

The third Thread Ring, shown in figure 7, controls HRQ-Threads which are causing a Write or state change in the shared data view. It is called The Change Ring and stores suspended HRQ-Threads in Time-Stamp order.

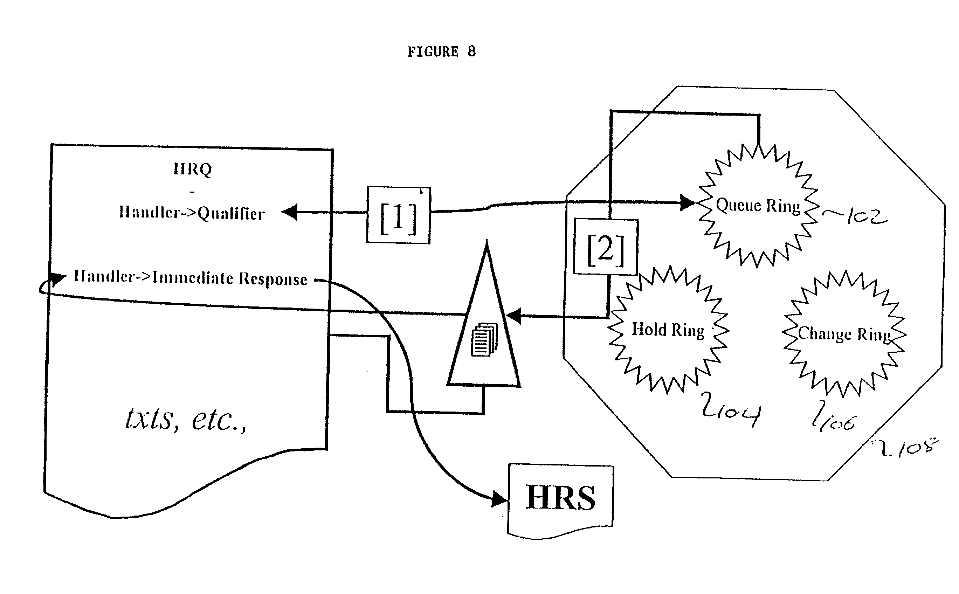

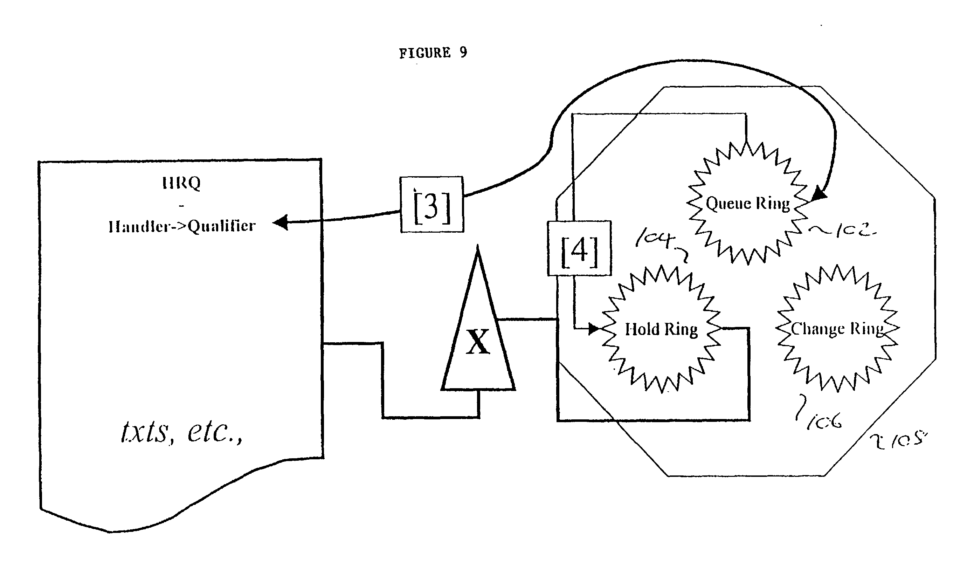

The operations of the three rings will now be described with reference to figures 8 to 11. As shown in figure 8, at step [1] an incoming HRQ is qualified by the queue ring using the application specific qualifier and time stamp. At step [2], if the HRQ is an out of date request, it can be satisfied immediately, and the HRQ thread is activated by the queue ring causing an HRS to be issued. At step [3] (figure 9) if qualification indicates that the read HRQ is concurrent with the data view, the HRQ thread remains suspended. At step [4] the suspended thread is passed to the hold ring.

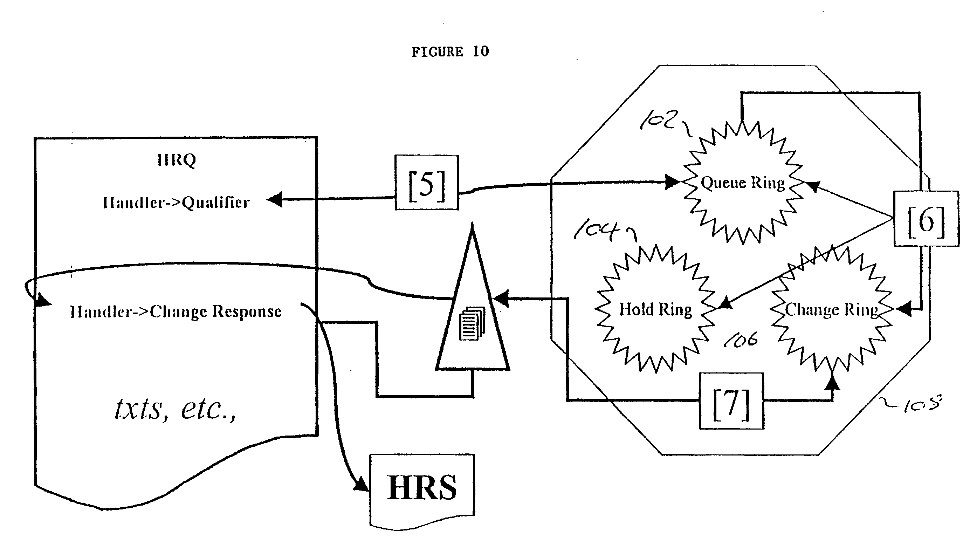

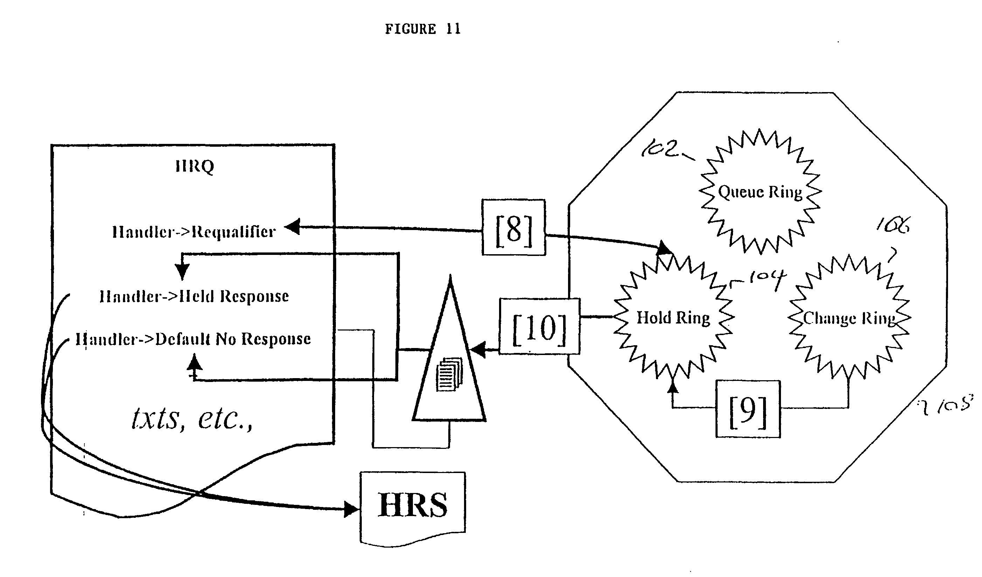

In figure 10, at step [5] if qualification indicates that the HRQ is a write or change request, the HRQ thread is transferred to the change ring. The ring controller stops the hold and queue rings, at step [6] whilst the write/change is made, and activates the HRQ thread, at step [7], the change is made an HRS issued. HRQ threads in the Hold ring are periodically requalified against the known state of the data view at step [8] (figure 11) and also whenever the change ring notifies that a state change has occurred at step [9]. If a state change has occurred at step [10], the HRQ thread is activated and an HRS made, or if the HRQ thread has timed out, a no change HRS is made.

In the embodiment described, the object components are software modules written using either a Microsoft COM compliant authoring tool, such as Visual C++, Visual Basic and Java, or a CORBA compliant authoring tool such as Java. The object components are specifications of Interfaces that are computer language independent.

The HRQ has been implemented as C++ class which wraps a single thread of execution (a Cpacket). The Cpacket uses a per-instance Public Signalled Event to allow thread suspension and activation by the Thread Ring. The Cpacket uses a per-instance thread-exclusive Critical Section to ensure single-threaded access to its public methods and properties. The Cpacket also wraps an Object Component representation of itself for external Object operations built using Microsoft COM rules and/or CORBA rules. The Cpacket implements default-on-error Immediate, Hold, Change and No Response Handlers.

The HRQ contains the following Properties. A Handler containing either a default empty string of text or an object component name by which an instance of an Object Component capable of handling the Tokenised Transaction Data can be invoked. A Type containing an optional string of text meaningful to the Handler invoked above.
A TxTS containing a valid Application Time-Stamp or the value ZERO (0). Flags containing bit-field signals between the Client IUA and Switch IS regarding the of the HRQ. A GUID which is a Globally Unique string of Text that identifies this unique HRQ.

The HRQ also contains the following Properties. Info comprises one of an Empty Value, HTML Text, Binary Data or Tokenised Transaction Data.

An Application specific Handler Object Component provides an implementation of the Qualifier and Requalifier functions (called by the Queue and Hold Rings). An Application specific Handler Object provides an implementation of Immediate, Hold, Change and No Response Handlers used by this Application (called by all Rings).

The Change, Hold and Queue Thread Rings operate under the Ring Controller. The Ring Controller is responsible for adding HRQ-Threads into the Thread Rings when they are Qualified. The Ring Controller ensures the three Thread Rings correctly synchronise:
If the Change Ring is operating a Change HRQ-Thread, the Hold and Queue Rings are suspended.
If the Hold Ring is operating a Hold HRQ-Thread, the Queue Ring is suspended.

Each HRQ-Thread is provided with an HRQ-Thread Interface which allows each HRQ-Thread to be (re)qualified, and call Ring-completion functions on Queued, Held or Changed outcomes. When an HRQ arrives at the Ring Controller's entry function, the Ring Controller examines the handler value in the HRQ and determines the appropriate software module to be called to handle the HRQ's Qualification requirements. This module is termed the HRQ's Switch Handler. There is a default Switch Handler which qualifies HRQs by Timestamp comparison with the Global System Timestamp. Additional custom Handlers can be built using either COM or CORBA as software brokerage protocols. The specific nature of such handlers will depend upon the implementation of the embodiment.

A Switch Handler exposes at least two fundamental methods:
- Qualify
- Requalify

These functions return one of four predefined status codes:
- The HRQ Qualifies for Immediate (or Queued) processing
- The HRQ Qualifies for Deferred (or Held) processing
- The HRQ Qualifies for Change processing
- The HRQ Qualifies for No Response at all

The HRQ is added to the Thread Ring appropriate to the Qualification handler's return code. If the HRQ is added to the Hold Ring, the Hold Ring will additionally use the Switch Handler signified for this HRQ to Requalify the HRQ. Each Thread Ring activates the internal thread in its controlled HRQ-Threads in synchronous first-in first-out order. Each HRQ-Thread in turn calls a Packet Handler, through its Thread Ring, to achieve completion. If for any reason an HRQ cannot complete, or the context does not require completion, the HRQ will call its Handler's Default No Response function.

There are four Completion functions in the HRQ-Thread Packet Handler Interface:
»Immediate Response
»Held Response
»Change Response
»Default No Response

The module that implements these is again determined from the handler value & termed the Packet Handler. There is a fail-safe default Packet Handler which returns an HTTP header embedded Timestamp value and the HTTP success code. Additional Handlers can be built using either COM or CORBA as software brokerage protocols.

A Packet Handler is custom-coded in C++ or Java and designed on a per-Application basis OR:
- Based on an HTML, DTML or XML scripting language OR:
   - Based on pure HTML/DTML responses.
The responsibility of Packet Handler is to return data or HTML meaningful to the IUA.
There is a SwitchBlade Switch and Packet Handlers which implement the SwitchBlade Data Engine, accepting update Invites, and in turn implement the Read, Write and Pending Delegates, the MOS and Owner's Master Database Interface; returning Updates to the SwitchBlade IUA on completion. The MOS is a Tree-Based Attribute-and-Value set. The Tree holds unique-per-tree named 'containers' of values. The Tree and named containers hold unique-per-container/tree named typed values and unique per-container named containers. Named values have the following types:
»Numeric
»Text
»Binary

The MOS is implemented using two relational database tables: a node identity table and a value identity table. This structure is mirrored in the LOS.

The Thread Ring is implemented as a C++ class that wraps a single thread of execution. The Thread Ring uses a per-instance Public Signalled Event to allow thread suspension and activation by the Thread Ring. The Thread Ring uses a per-instance thread-exclusive Critical Section to ensure single-threaded access to its public methods and properties. A Base Class for all Thread Rings provides the core functionality of all Rings, which is modified to the needs of each of the Three Ring States.

The Ring Controller is implemented as a C++ class that wraps a single thread of execution. The Ring Controller uses a per-instance Public Signalled Event to allow thread suspension and activation by the Thread Ring. The Ring Controller uses a per-instance thread-exclusive Critical Section to ensure single- access to its public methods and properties. There is only one Ring Controller per-Server instance of an implementation of the embodiment. Suspending The Ring Controller suspends all subsidiary Thread Rings and HRQ Threads. The Ring Controller implements a Global ATxTS for all applications running in its domain.

The use of the embodiment of the invention will depend on the application program to which it is applied. To establish a suitable environment for each application, the client establishes a context.

Whenever a User connects to a Server embodying the invention through the Client, a number of Contexts are established. There is one Global Context applied to all Users: the User Context. This is created using either a system standard, or Application bespoke Logon request.
The User Context is generic. Some Applications (for example Online Banking) are highly User-specified and the majority of Data stored by the Client will be private to that User. Some Applications (for example Online Auctioning) only require the User's identity, and the majority of Data stored by the Client will be shared with all or most other Users. Other Contexts can also be applied for Application bespoke use. A Context determines what part of a Master data view is shared with a particular Client Application. A Context can be a third-party software product. Contexts and any software modules required to articulate those Contexts can be transferred between the Server and Client as if they were data, and any changes or upgrades to that software is automatically updated client-side using standard SwitchBlade methods on the software modules' filing system Time stamps.

Context configuration is stored and configured using the Local Object Store [44] module. The Replicator [42] is the principal software module and API creating a running instance of the Client. This running instance creates two separate TCP/IP connections with the host Server. The first connection is used to Invite updates from the instance of the User's read delegate on the host Server. The second connection is used to send change requests to the host Server. The Replicator [42] exposes the LOS [44] as a protected data source and ensures referential integrity with the Master copy held at the Server. The Replicator [42] is responsible for creating and submitting to the Server the User Context [40] module, API and request packet. The Replicator [42] uses the definition of ad-hoc structured data storage contained in the LOS [44] to create and maintain Application Databases in the LCD [32]. The Replicator issues Invites to the host Server to update specific views of the Master RDBMS at the Server, and maintains these views concurrently as long as the Client is online to the Server.

The Application Databases defined in the LCD [32] are exposed to the Application using the Containers [38] software module and API. Containers receive updates concurrently to the Application use of them. Containers prevent direct modification of the LCD [32] data source. Containers allow a row-by-row, cursor oriented view of the underlying data. Containers obscure from view internal SwitchBlade mechanisms such as per-row Time stamps and deletion markers. All LCD data sources contain the following per-row of data additional SwitchBlade fields:
- Timestamp (as defined above)
- a Boolean deletion marker
- a unique index, conforming to the Third Normal Form of Relational Set Theory, uniquely identifying each data row. This field may be explicit in the data, and exposed through the Containers [38] software module and interface.
- Per-row Time stamps may optionally be unimplemented, if the specific data resource being replicated is updated on a whole-table basis.

An alternative implementation of the embodiment of the system will now be described. As previously discussed, the embodiment of the invention is applicable to structured or unstructured data.

HTML pages are essentially unstructured data. A user viewing a web page using the embodiment of the invention will have an up to date view of that page. In HTML based operations the client IUA 1 of the embodiment is emulated using the following techniques in the Web Browser. First, each HTML page generated at the server contains a very short HTTP META-Equivalent command causing the Browser to request a Page Refresh in a very short period typically less than 5 sec. Each HTML page generated by the server contains an embedded timestamp, as previously described, which is resent from the browser to the server when the HTML page refresh command is sent by the browser. If the time stamp in the refresh command is contemporaneous with the global TxTs at the server, a 40 second resistant timeout is exerted at the server before responding to the refresh request. This is implemented by the hold ring previously described. If during the period of the resistant timeout, the content of the HTML page at the server is modified by another viewer, the modified page is returned to the browser as the response to the refresh request. This is by the process of qualification and requalification previously described. If during the period of the resistant timeout, the content of the HTML page at the server does not change, the server will respond to the request with either: a true refresh of the same page by resubmitting the original, or near original data to the browser; or issue an HTTP Code 204 response indicating no change in page status or content.

In the manner described a plurality of IUAs 1 have a near contemporaneous shared view of a Web page. This is view is also kept up to date as soon as the Web page changes.

## Claims

1. A system for processing requests in a request-response client-server computer network in which a plurality of clients communicate with a server by issuing requests to read or write data, comprising:
- a request receiver for receiving a plurality of requests from the clients;
- a request analyser for analysing each of the plurality of requests in turn passed from the request receiver and arranged to extract from each request a time indicator indicative of when the last-transaction providing a response from the server to the client occurred;
- a request qualifier for qualifying each received request as either an actionable request for which action should be taken and a response issued, or a deferrable request for which action should be delayed and a response deferred until an actionable state is reached wherein the request qualifier is arranged to compare the extracted time indicator with the time the requested data was last modified and is arranged to qualify a request as an actionable request if the time indicator indicates a time earlier than the time the requested data was last modified;
- a state indicator for indicating, for each deferrable request, when the actionable state is reached such that each such deferrable request is requalified as an actionable request; and
- a response indicator for indicating for each actionable request to the server that each such actionable request should be actioned and a response provided.

2. A system according to claim 1, wherein the request analyser comprises a request queue store for storing requests in order of arrival of requests at the request receiver.

3. A system according to claim 1 or 2, wherein the request analyser comprises a request retriever for retrieving requests from the request queue store in order of arrival at the request receiver and for passing the requests so retrieved to the request qualifier.

4. A system according to claim 1, 2 or 3, wherein the request analyser is arranged to determine whether the request is to read or write data.

5. A system according to claim 4, further comprising a controller for controlling operation of the request analyser, request qualifier, state indicator and response indicator, and for optionally suspending operation of each, if the request analyser determines that the next request is to write data, until the data has been written.

6. A system according to claim 1, wherein the time indicator is a time stamp.

7. A system according to claim 1, wherein the request qualifier is arranged to qualify the request as deferrable if the time indicator indicates a time later than or equal to the time the requested data was last modified.

8. A system according to any of claim 1, wherein the state indicator comprises a held request store for storing deferrable requests in time indicator order.

9. A system according to claim 8, wherein the state indicator comprises a held request retriever for retrieving requests from the held request store in time indicator order, the qualifier being arranged to qualify by comparing the time the requested data was last modified with the time indicator, the state indicator arranged to indicate that an actionable state is reached if the time indicator indicates a time older than the time the requested data was last modified.

10. A system according to claim 9, wherein the held request retriever is arranged to periodically retrieve requests from the held request store.

11. A system according to claim 9 or 10, wherein the held request retriever is arranged to retrieve requests from the held request store in response to a notification from the server that data stored at the server has changed.

12. A method for processing requests in a request-response client-server computer network in which a plurality of clients communicate with a server by issuing requests to read or write data, comprising:
- receiving a plurality of requests from the clients at a receiver;
- analysing each of the plurality of requests passed from the request receiver in a request analyser by extracting from each request a time indicator indicative of when the last transaction providing a response from the server to the client occurred;
- qualifying each request in a request qualifier as either an actionable request for which action should be taken and a response issued, or a deferrable request for which action should be delayed and a response deferred until an actionable state is reached by comparing the extracted time indicator with the time the requested data was last modified and qualifying the request as an actionable request if the time indicator indicates a time earlier than the time the requested data was last modified;
- indicating from a state indicator, for each deferrable request, when the actionable state is reached such that each such deferrable request is requalified as an actionable request; and
- indicating from a response indicator for each actionable request to the server that each such actionable request should be actioned and a response provided.

13. A method according to claim 12, wherein the step of analysing further comprises storing requests in a request queue store in order of arrival of the requests at the request receiver.

14. A method according to claim 12, or 13, wherein the step of analysing further comprises retrieving requests from the request queue store in order of arrival at the request receiver and passing the requests so retrieved to the request qualifier.

15. A method according to any of claims 15, 16 or 17, wherein the step of analysing further comprises determining whether the request is to read or write data.

16. A method according to claim 15, further comprising controlling operation of the request analyser, request qualifier, state indicator and response indicator with a controller, and optionally suspending operation of each, if the request analyser determines that the next request is to write data, until the data has been written.

17. A method according to claim 12, wherein the time indicator is a time stamp.

18. A method according to claim 12, wherein the request qualifier qualifies the request as a deferrable request if the time indicator indicates a time later than or equal to the time the requested data was last modified.

19. A method according to claim 12, further comprising storing deferrable requests in a held request store in time indicator order.

20. A method according to claim 19, further comprising retrieving requests from the held request store, comparing the time indicator of the requests with the time the requested data was last modified, wherein the actionable state is reached if the time indicator indicates a time earlier than the time the requested data was last modified.

21. A method according to claim 20, wherein the step of retrieving comprises periodically retrieving requests from the held request store.

22. A method according to claim 20 or 21, wherein the step of retrieving comprises retrieving requests from the held request store in response to a notification from the server that data stored at the server has changed.

23. A request-response client-server computer network comprising a plurality of clients and a server with which the client communicate by issuing requests to read or write data, comprising:
at each client:
- a client data store holding data provided from the server; and
- a request provider for issuing requests to read or write data to the server;
at each server:
- a server data store holding a master copy of data provided to each client;
- a request receiver for receiving a plurality of requests from the clients;
- a request analyser for analysing each of the plurality of requests in turn passed from the request receiver by extracting from each request a time indicator;
- a request qualifier for qualifying each received request as either an actionable request for which action should be taken and a response issued, or a deferrable request for which action should be delayed and a response deferred until an actionable state is reached and arranged to to compare the extracted time indicator with the time the requested data was last modified in the server data store and to qualify a request as an actionable request if the time indicator indicates a time earlier than the time the requested data was last modified in the server data store;
- a state indicator for indicating, for each deferrable request, when the actionable state is reached such that each such deferrable request is requalified as an actionable request; and
- a response indicator for indicating for each actionable request that each such actionable request should be actioned by the server and a response provided from the server.

24. A network according to claim 23, wherein the request analyser comprises a request queue store for storing requests in order of arrival of requests at the request receiver.

25. A network according to claim 23 or 24, wherein the request analyser comprises a request retriever for retrieving requests from the request queue store in order of arrival at the request receiver and for passing the requests so retrieved to the request qualifier.

26. A network according to claim 23, 24 or 25, wherein the request analyser is arranged to determine whether the request is to read or write data.

27. A network according to claim 26, further comprising a controller for controlling operation of the request analyser, request qualifier, state indicator and response indicator, and for optionally suspending operation of each, if the request analyser determines that the next request is to write data, until the data has been written.

28. A network according to any of claims 23 to 27, wherein the request provider is arranged to issue requests to read data from the server data store, each request including a time indicator indicative of when the last transaction providing a response from the server to the client occurred.

29. A network according to claim 23, wherein the time indicator is a time stamp.

30. A network according to claim 23, wherein the request qualifier is arranged to qualify the request as deferrable if the time indicator indicates a time later than or equal to the time the requested data was last modified.

31. A network according to claim 23, wherein the state indicator comprises a held request store for storing deferrable requests in time indicator order.

32. A network according to claim 31, wherein the state indicator comprises held request retriever for periodically retrieving requests from the held request store, the qualifier being arranged to qualify by comparing the time the requested data was last modified with the time indicator, the state indicator arranged to indicate that an actionable state is reached if the time indicator indicates a time older than the time the requested data was last modified.

33. A network according to claim 28, wherein each client is arranged to repeatedly issue requests to read data from the server data store and to write the data received to the client data store.

34. A network according to claim 33, wherein the client data store and server data store hold structured data.

35. A network according to claim 34, wherein the structured data in the client data store forms a client database, and the time indicator is indicative of when the last transaction providing a response from the server to the client occurred.

36. A network according to claim 34 or 35, wherein the structured data in the server data store forms a server database, and each portion of the server database includes a time field indicating the time at which the portion of data was last modified.

37. A network according to claim 33, wherein the client data store and server data store hold unstructured data.

38. A network according to claim 33, wherein the unstructured data is a page of HTML data.

39. A computer program product for controlling a computer in a request-response client-server computer network in which a plurality of clients communicate with a server by issuing requests to read or write data, comprising a recording medium readable by the computer; and means recorded on the recording medium for directing the computer to:
- receive a plurality of requests from the clients at a receiver;
- analyse each of the plurality of requests passed from the request receiver in a request analyser by extracting from each request a time indicator indicative of when the requesting client last received a response from the server;
- qualify each request in a request qualifier as either an actionable request for which action should be taken and a response issued, or a deferrable request for which action should be delayed and a response deferred until an actionable state is reached by comparing the extracted time indicator with the time the requested data was last modified and wherein the request is an actionable request if the time indicator indicates a time older than the time the requested data was last modified;
- indicate from a state indicator, for each deferrable request, when the actionable state is reached such that each such deferrable request is requalified as an actionable request; and
- indicate from a response indicator for each actionable request to the server that each such actionable request should be actioned and a response provided.

40. A computer program product according to claim 39, wherein the step of analysing further comprises storing requests in a request queue store in order of arrival of the requests at the request receiver.

41. A computer program product according to claim 39, or 49, wherein the step of analysing further comprises retrieving requests from the request queue store in order of arrival at the request receiver and passing the requests so retrieved to the request qualifier.

42. A computer program product according to any of claims 39, 40 or 41, wherein the step of analysing further comprises determining whether the request is to read or write data.

43. A computer program product according to claim 42, the means further comprising a control subroutine for controlling operation of the request analyser, request qualifier, state indicator and response indicator with a controller, and suspending operation of each, if the request analyser determines that the next request is to write data, until the data has been written.

44. A computer program product according to claim 39, wherein the time indicator is a time stamp.

45. A computer program product according to claim 39, wherein the request qualifier qualifies the request as a deferrable request if the time indicator indicates a time younger than the time the requested data was last modified.

46. A computer program product according to claim 39, further comprising storing deferrable requests in a held request store in time indicator order.

47. A computer program product according to claim 46, further comprising periodically retrieving requests from the held request store, comparing the time indicator of the requests with the time the requested data was last modified, wherein the actionable state is reached if the time indicator indicates a time older than the time the requested data was last modified.

48. A system according to any of claims 1 to 11, wherein the requests and responses are HTTP requests and responses.

49. A method according to any of claims 12 to 22, wherein the requests and responses are HTTP requests and responses.

50. A network according to any of claims 23 to 38, wherein the requests and responses are HTTP requests and responses.

51. A computer program product according to any of claims 39 to 47, wherein the requests and responses are HTTP requests and responses.

## Patentansprüche

1. System zur Bearbeitung von Anforderungen in einem Anforderung-Antwort-Client-Server-Computernetz, in dem eine Mehrzahl von Clients durch Ausgeben von Anforderungen zum Lesen oder Schreiben von Daten mit einem Server kommunizieren, umfassend:
- einen Anforderungsempfänger zum Empfangen einer Mehrzahl von Anforderungen von den Clients;
- einen Anforderungsanalysator zum Analysieren jeder der Mehrzahl von Anforderungen, die wiederum vom Anforderungsempfänger weitergeleitet wurden, mit der Aufgabe, jeder Anforderung einen Zeitanzeiger zu entnehmen, der anzeigt, wann die letzte Transaktion stattfand, bei der der Client eine Antwort vom Server erhielt;
- einen Anforderungskennzeichner zum Kennzeichnen jeder empfangenen Anforderung als eine ausführbare Anforderung, für die eine Aktion durchgeführt und eine Antwort auszugeben ist, oder als eine zeitverschiebbare Anforderung, für die eine Aktion zeitlich zu verzögern und eine Antwort zeitlich zu verschieben ist, bis ein ausführbarer Zustand erreicht ist, wobei der Anforderungskennzeichner die Aufgabe hat, den entnommenen Zeitanzeiger mit der Zeit zu vergleichen, zu der die angeforderten Daten zuletzt modifiziert wurden, und die Aufgabe hat, eine Anforderung als eine ausführbare Anforderung zu kennzeichnen, wenn der Zeitanzeiger eine frühere Zeit als die Zeit anzeigt, zu der die angeforderten Daten zuletzt modifiziert wurden;
- einen Zustandsanzeiger, um für jede zeitverschiebbare Anforderung anzuzeigen, wenn der ausführbare Zustand erreicht wird, sodass jede derartige zeitverschiebbare Anforderung in eine ausführbare Anforderung umgekennzeichnet wird; und
- einen Antwortanzeiger, um dem Server für jede ausführbare Anforderung anzuzeigen, dass jede derartige ausführbare Anforderung auszuführen und eine Antwort dafür zu geben ist.

2. System nach Anspruch 1, bei dem der Anforderungsanalysator einen Anforderungswarteschlangenspeicher zum Speichern von Anforderungen in der Reihenfolge des Eintreffens von Anforderungen am Anforderungsempfänger umfasst.

3. System nach Anspruch 1 oder 2, bei dem der Anforderungsanalysator einen Anforderungsabrufer zum Abrufen von Anforderungen aus dem Anforderungswarteschlangenspeicher in Reihenfolge des Eintreffens von Anforderungen am Anforderungsempfänger und zum Weiterleiten so abgerufener Anforderungen an den Anforderungskennzeichner umfasst.

4. System nach Anspruch 1, 2 oder 3, bei dem der Anforderungsanalysator die Aufgabe hat festzustellen, ob die Anforderung zum Lesen oder zum Schreiben von Daten ist.

5. System nach Anspruch 4, ferner umfassend einen Controller zum Steuern des Betriebs von Anforderungsanalysator, Anforderungskennzeichner, Zustandsanzeiger und Antwortanzeiger und zum wahlweisen Anhalten des Betriebs von jedem, wenn der Anforderungsanalysator feststellt, dass die nächste Anforderung zum Schreiben von Daten ist, bis die Daten geschrieben sind.

6. System nach Anspruch 1, bei dem der Zeitanzeiger eine Zeitmarke ist.

7. System nach Anspruch 1, bei dem der Anforderungskennzeichner die Aufgabe hat, die Anforderung als zeitverschiebbar zu kennzeichnen, wenn der Zeitanzeiger eine Zeit anzeigt, die gleich der oder später als die Zeit ist, zu der die angeforderten Daten zuletzt modifiziert wurden.

8. System nach Anspruch 1, bei dem der Zustandsanzeiger einen Wartende-Anforderungen-Speicher zum Speichern zeitverschiebbarer Anforderungen in der Reihenfolge der Zeitanzeiger hat.

9. System nach Anspruch 8, bei dem der Zustandsanzeiger einen Wartende-Anforderungen-Abrufer zum Abrufen von Anforderungen aus dem Wartende-Anforderungen-Speicher in der Reihenfolge der Zeitanzeiger umfasst, wobei der Kennzeichner die Aufgabe hat, durch Vergleichen der Zeit, zu der die angeforderten Daten zuletzt modifiziert wurden, mit dem Zeitanzeiger zu kennzeichnen, wobei der Zustandsanzeiger die Aufgabe hat anzuzeigen, dass ein ausführbarer Zustand erreicht ist, wenn der Zeitanzeiger eine Zeit anzeigt, die älter ist als die Zeit, zu der die angeforderten Daten zuletzt modifiziert wurden.

10. System nach Anspruch 9, bei dem der Wartende-Anforderungen-Abrufer die Aufgabe hat, periodisch Anforderungen aus dem Wartende-Anforderungen-Speicher abzurufen.

11. System nach Anspruch 9 oder 10, bei dem der Wartende-Anforderungen-Abrufer die Aufgabe hat, Anforderungen aus dem Wartende-Anforderungen-Speicher als Reaktion auf eine Avisierung vom Server abzurufen, dass auf dem Server gespeicherte Daten geändert wurden.

12. Verfahren zum Bearbeiten von Anforderungen in einem Anforderung-Antwort-Client-Server-Computernetz, in dem eine Mehrzahl von Clients durch Ausgeben von Anforderungen zum Lesen oder Schreiben von Daten mit einem Server kommunizieren, umfassend:
- Empfangen einer Mehrzahl von Anforderungen von den Clients an einem Empfänger;
- Analysieren jeder der Mehrzahl von Anforderungen, die vom Anforderungsempfänger weitergeleitet wurden, in einem Anforderungsanalysator, indem jeder Anforderung ein Zeitanzeiger entnommen wird, der anzeigt, wann die letzte Transaktion stattfand, bei der der Client eine Antwort vom Server erhielt;
- Kennzeichnen jeder Anforderung in einem Anforderungskennzeichner als eine ausführbare Anforderung, für die eine Aktion durchzuführen und eine Antwort auszugeben ist, oder als eine zeitverschiebbare Anforderung, für die eine Aktion zeitlich zu verzögern und eine Antwort zeitlich zu verschieben ist, bis ein ausführbarer Zustand erreicht ist, indem der entnommene Zeitanzeiger mit der Zeit verglichen wird, zu der die angeforderten Daten zuletzt modifiziert wurden, und die Anforderung als eine ausführbare Anforderung **gekennzeichnet** wird, wenn der Zeitanzeiger eine frühere Zeit als die Zeit anzeigt, zu der die angeforderten Daten zuletzt modifiziert wurden;
- für jede zeitverschiebbare Anforderung das Anzeigen mit einem Zustandsanzeiger, wenn der ausführbare Zustand erreicht wird, sodass jede derartige zeitverschiebbare Anforderung in eine ausführbare Anforderung umgekennzeichnet wird; und
- dem Server für jede ausführbare Anforderung Anzeigen, dass jede derartige ausführbare Anforderung auszuführen und eine Antwort zu geben ist.

13. Verfahren nach Anspruch 12, bei dem der Schritt des Analysierens ferner das Speichern von Anforderungen in einem Anforderungswarteschlangenspeicher in der Reihenfolge des Eintreffens der Anforderungen am Anforderungsempfänger umfasst.

14. Verfahren nach Anspruch 12 oder 13, bei dem der Schritt des Analysierens ferner das Abrufen von Anforderungen aus dem Anforderungswarteschlangenspeicher in der Reihenfolge des Eintreffens der Anforderungen am Anforderungsempfänger und das Weiterleiten der so aberufenen Anforderungen an den Anforderungskennzeichner umfasst.

15. Verfahren nach einem der Ansprüche 15, 16 und 17, bei dem der Schritt des Analysierens ferner das Feststellen umfasst, ob die Anforderung zum Lesen oder Schreiben von Daten ist.

16. Verfahren nach Anspruch 15, ferner umfassend die Steuerung des Betriebs von Anforderungsanalysator, Anforderungskennzeichner, Zustandsanzeiger und Antwortanzeiger mit einem Controller und das wahlweise Anhalten des Betriebs von jedem, wenn der Anforderungsanalysator feststellt, dass die nächste Anforderung zum Schreiben von Daten ist, bis die Daten geschrieben sind.

17. Verfahren nach Anspruch 12, bei dem der Zeitanzeiger eine Zeitmarke ist.

18. Verfahren nach Anspruch 12, bei dem der Anforderungskennzeichner die Anforderung als eine zeitverschiebbare Anforderung kennzeichnet, wenn der Zeitanzeiger eine Zeit anzeigt, die gleich der oder später als die Zeit ist, zu der die angeforderten Daten zuletzt modifiziert wurden.

19. Verfahren nach Anspruch 12, ferner umfassend das Speichern zeitverschiebbarer Anforderungen in einem Wartende-Anforderungen-Speicher in der Reihenfolge der Zeitanzeiger.

20. Verfahren nach Anspruch 19, ferner umfassend das Abrufen von Anforderungen aus dem Wartende-Anforderungen-Speicher, wobei der Zeitanzeiger der Anforderungen mit der Zeit verglichen wird, zu der die angeforderten Daten zuletzt modifiziert wurden, wobei der ausführbare Zustand erreicht ist, wenn der Zeitanzeiger eine Zeit anzeigt, die früher ist als die Zeit, zu der die angeforderten Daten zuletzt modifiziert wurden.

21. Verfahren nach Anspruch 20, bei dem der Schritt des Abrufens das periodische Abrufen von Anforderungen aus dem Wartende-Anforderungen-Speicher umfasst.

22. Verfahren nach Anspruch 20 oder 21, bei dem der Schritt des Abrufens das Abrufen von Anforderungen aus dem Wartende-Anforderungen-Speicher als Reaktion auf eine Avisierung vom Server umfasst, dass auf dem Server gespeicherte Daten geändert wurden.

23. Anforderung-Antwort-Client-Server-Computernetz, umfassend eine Mehrzahl von Clients und einen Server, mit dem der Client durch Ausgeben von Anforderungen zum Lesen oder Schreiben von Daten kommuniziert, umfassend:
an jedem Client:
- einen Clientdatenspeicher, der vom Server bereitgestellte Daten hält, und
- einen Anforderungserzeuger zum Ausgeben von Anforderungen zum Lesen oder Schreiben von Daten an den Server;
an jedem Server:
- einen Serverdatenspeicher, der eine Stammkopie der an jeden Client gesendeten Daten hält,
- einen Anforderungsempfänger zum Empfangen einer Mehrzahl von Anforderungen von den Clients;
- einen Anforderungsanalysator zum Analysieren jeder der Mehrzahl von Anforderungen, die wiederum vom Anforderungsempfänger weitergeleitet wurden, durch Entnehmen eines Zeitanzeigers aus jeder Anforderung,
- einen Anforderungskennzeichner zum Kennzeichnen jeder empfangenen Anforderung als eine ausführbare Anforderung, für die eine Aktion durchzuführen und eine Antwort auszugeben ist, oder als eine zeitverschiebbare Anforderung, für die eine Aktion zeitlich zu verzögern und eine Antwort zeitlich zu verschieben ist, bis ein ausführbarer Zustand erreicht ist, mit der Aufgabe, den entnommenen Zeitanzeiger mit der Zeit zu vergleichen, zu der die angeforderten Daten im Serverdatenspeicher zuletzt modifiziert wurden, und um eine Anforderung als eine ausführbare Anforderung zu kennzeichnen, wenn der Zeitanzeiger eine frühere Zeit als die Zeit anzeigt, zu der die angeforderten Daten im Serverdatenspeicher zuletzt modifiziert wurden;
- einen Zustandsanzeiger zum Anzeigen, für jede zeitverschiebbare Anforderung, wenn der ausführbare Zustand erreicht wird, sodass jede derartige zeitverschiebbare Anforderung in eine ausführbare Anforderung umgekennzeichnet wird; und
- einen Antwortanzeiger zum Anzeigen für jede ausführbare Anforderung, dass jede derartige ausführbare Anforderung vom Server auszuführen und vom Server eine Antwort zu geben ist.

24. Netzwerk nach Anspruch 23, bei dem der Anforderungsanalysator einen Anforderungswarteschlangenspeicher zum Speichern von Anforderungen in der Reihenfolge des Eintreffens von Anforderungen am Anforderungsempfänger umfasst.

25. Netzwerk nach Anspruch 23 oder 24, bei dem der Anforderungsanalysator einen Anforderungsabrufer zum Abrufen von Anforderungen aus dem Anforderungswarteschlangenspeicher in der Reihenfolge des Eintreffens von Anforderungen am Anforderungsempfänger und zum Weiterleiten so abgerufener Anforderungen an den Anforderungskennzeichner umfasst.

26. Netzwerk nach Anspruch 23, 24 oder 25, bei dem der Anforderungsanalysator die Aufgabe hat festzustellen, ob die Anforderung für das Lesen oder Schreiben von Daten ist.

27. Netzwerk nach Anspruch 26, ferner umfassend einen Controller zum Steuern des Betriebs von Anforderungsanalysator, Anforderungskennzeichner, Zustandsanzeigers und Antwortanzeigers und zum wahlweisen Anhalten des Betriebs von jedem, wenn der Anforderungsanalysator feststellt, dass die nächste Anforderung zum Schreiben von Daten ist, bis die Daten geschrieben sind.

28. Netzwerk nach einem der Ansprüche 23 bis 27, bei dem der Anforderungserzeuger die Aufgabe hat, Anforderungen zum Lesen von Daten aus dem Serverdatenspeicher auszugeben, wobei jede Anforderung einen Zeitanzeiger hat, der anzeigt, wann die letzte Transaktion stattfand, bei der der Client eine Antwort vom Server erhielt.

29. Netzwerk nach Anspruch 23, bei dem der Zeitanzeiger eine Zeitmarke ist.

30. Netzwerk nach Anspruch 23, bei dem der Anforderungskennzeichner die Aufgabe hat, die Anforderung als zeitverschiebbar zu kennzeichnen, wenn der Zeitanzeiger eine Zeit anzeigt, die gleich der oder später als die Zeit ist, zu der die angeforderten Daten zuletzt modifiziert wurden.

31. Netzwerk nach Anspruch 23, bei dem der Zustandsanzeiger einen Wartende-Anforderungen-Speicher zum Speichern zeitverschiebbarer Anforderungen in der Reihenfolge der Zeitanzeiger hat.

32. Netzwerk nach Anspruch 31, bei dem der Zustandsanzeiger einen Wartende-Anforderungen-Abrufer zum periodischen Abrufen von Anforderungen aus dem Wartende-Anforderungen-Speicher umfasst, wobei der Kennzeichner die Aufgabe hat, durch Vergleichen der Zeit, zu der die angeforderten Daten zuletzt modifiziert wurden, mit dem Zeitanzeiger zu kennzeichnen, wobei der Zustandsanzeiger die Aufgabe hat anzuzeigen, dass ein ausführbarer Zustand erreicht ist, wenn der Zeitanzeiger eine Zeit anzeigt, die früher ist als die Zeit, zu der die angeforderten Daten zuletzt modifiziert wurden.

33. Netzwerk nach Anspruch 28, bei dem jeder Client die Aufgabe hat, wiederholt Anforderungen zum Lesen von Daten aus dem Serverdatenspeicher und zum Schreiben der empfangenen Daten in den Clientdatenspeicher auszugeben.

34. Netzwerk nach Anspruch 33, bei dem der Clientdatenspeicher und der Serverdatenspeicher strukturierte Daten speichern.

35. Netzwerk nach Anspruch 34, bei dem die strukturierten Daten im Clientdatenspeicher eine Clientdatenbank bilden und der Zeitanzeiger anzeigt, wann die letzte Transaktion stattfand, bei der der Client eine Antwort vom Server erhielt.

36. Netzwerk nach Anspruch 34 oder 35, bei dem die strukturierten Daten im Serverdatenspeicher eine Serverdatenbank bilden und jeder Teil der Serverdatenbank ein Zeitfeld aufweist, das die Zeit anzeigt, an dem der Datenteil zuletzt modifiziert wurde.

37. Netzwerk nach Anspruch 33, bei dem der Clientdatenspeicher und der Serverdatenspeicher unstrukturierte Daten speichern.

38. Netzwerk nach Anspruch 33, bei dem die unstrukturierten Daten eine Seite von HTML-Daten sind.

39. Computerprogrammprodukt zum Steuern eines Computers in einem Anforderung-Antwort-Client-Server-Computernetz, in dem eine Mehrzahl von Clients durch Ausgeben von Anforderungen zum Lesen oder Schreiben von Daten mit einem Server kommunizieren, umfassend einen vom Computer lesbaren Aufzeichnungsträger und auf dem Aufzeichnungsträger aufgezeichnete Mittel zum Anweisen des Computers zu Folgendem:
- Empfangen einer Mehrzahl von Anforderungen von den Clients an einem Empfänger;
- Analysieren jeder der Mehrzahl von Anforderungen, die vom Anforderungsempfänger weitergeleitet wurden, in einem Anforderungsanalysator, indem jeder Anforderung ein Zeitanzeiger entnommen wird, der anzeigt ist, wann der anfordernde Client zuletzt eine Antwort vom Server erhielt;
- Kennzeichnen jeder Anforderung in einem Anforderungskennzeichner als eine ausführbare Anforderung, für die eine Aktion durchzuführen und eine Antwort auszustellen ist, oder als eine zeitverschiebbare Anforderung, für die eine Aktion zeitlich zu verzögern und eine Antwort zeitlich zu verschieben ist, bis ein ausführbarer Zustand erreicht ist, indem der entnommene Zeitanzeiger mit der Zeit, zu der die angeforderten Daten zuletzt modifiziert wurden, verglichen wird, und wobei die Anforderung eine ausführbare Anforderung ist, wenn der Zeitanzeiger eine ältere Zeit als die Zeit anzeigt, zu der die angeforderten Daten zuletzt modifiziert wurden;
- für jede zeitverschiebbare Anforderung das Anzeigen mit einem Zustandsanzeiger, wenn der ausführbare Zustand erreicht wird, sodass jede derartige zeitverschiebbare Anforderung in eine ausführbare Anforderung umgekennzeichnet wird; und
- dem Server für jede ausführbare Anforderung Anzeigen, dass jede derartige ausführbare Anforderung auszuführen und eine Antwort zu geben ist.

40. Computerprogrammprodukt nach Anspruch 36, bei dem der Schritt des Analysierens ferner das Speichern von Anforderungen in einem Anforderungswarteschlangenspeicher in der Reihenfolge des Eintreffens der Anforderungen am Anforderungsempfänger umfasst.

41. Computerprogrammprodukt nach Anspruch 39 oder 49, bei dem der Schritt des Analysierens ferner das Abrufen von Anforderungen aus dem Anforderungswarteschlangenspeicher in der Reihenfolge ihres Eintreffens am Anforderungsempfänger und das Weiterleiten der so aberufenen Anforderungen an den Anforderungskennzeichner umfasst.

42. Computerprogrammprodukt nach einem der Ansprüche 39, 40 und 41, bei dem der Schritt des Analysierens ferner das Feststellen umfasst, ob die Anforderung zum Lesen oder zum Schreiben von Daten ist.

43. Computerprogrammprodukt nach Anspruch 42, wobei die Mittel ferner eine Steuersubroutine zum Steuern des Betriebs von Anforderungsanalysator, Anforderungskennzeichner, Zustandsanzeiger und Antwortanzeiger mit einem Controller und das Anhalten des Betriebs von jedem umfassen, wenn der Anforderungsanalysator feststellt, dass die nächste Anforderung zum Schreiben von Daten ist, bis die Daten geschrieben sind.

44. Computerprogrammprodukt nach Anspruch 39, bei dem der Zeitanzeiger eine Zeitmarke ist.

45. Computerprogrammprodukt nach Anspruch 39, bei dem der Anforderungskennzeichner die Anforderung als eine zeitverschiebbare Anforderung kennzeichnet, wenn der Zeitanzeiger eine Zeit anzeigt, die jünger ist als die Zeit, zu der die angeforderten Daten zuletzt modifiziert wurden.

46. Computerprogrammprodukt nach Anspruch 39, ferner umfassend das Speichern zeitverschiebbarer Anforderungen in einem Wartende-Anforderungen-Speicher in der Reihenfolge der Zeitanzeiger.

47. Computerprogrammprodukt nach Anspruch 46, ferner umfassend das periodische Abrufen von Anforderungen aus dem Wartende-Anforderungen-Speicher, wobei der Zeitanzeiger der Anforderungen mit der Zeit verglichen wird, zu der die angeforderten Daten zuletzt modifiziert wurden, wobei der ausführbare Zustand erreicht ist, wenn der Zeitanzeiger eine Zeit anzeigt, die älter ist als die Zeit, zu der die angeforderten Daten zuletzt modifiziert wurden.

48. System nach einem der Ansprüche 1 bis 11, bei dem die Anforderungen und Antworten HTTP-Anforderungen und HTTP-Antworten sind.

49. Verfahren nach einem der Ansprüche 12 bis 22, bei dem die Anforderungen und Antworten HTTP-Anforderungen und HTTP-Antworten sind.

50. Netzwerk nach einem der Ansprüche 23 bis 38, bei dem die Anforderungen und Antworten HTTP-Anforderungen und HTTP-Antworten sind.

51. Computerprogrammprodukt nach einem der Ansprüche 39 bis 47, bei dem die Anforderungen und Antworten HTTP-Anforderungen und HTTP-Antworten sind.

## Revendications

1. Système pour traiter des demandes dans un réseau informatique clients-serveur à demande-réponse dans lequel une de pluralité de clients communiquent avec un serveur en émettant des demandes de lecture ou d'écriture de données, comprenant :
- un receveur de demandes pour recevoir une pluralité de demandes des clients ;
- un analyseur de demandes pour analyser une à la fois chacune de la pluralité de demandes passées depuis le receveur de demandes et disposé pour extraire de chaque demande un indicateur de temps indicatif du temps d'occurrence de la dernière transaction ayant fourni une réponse du serveur au client ;
- un qualificateur de demandes pour qualifier chaque demande reçue soit comme une demande exécutable pour laquelle une action doit être prise et une réponse émise, soit comme une demande ajournable pour laquelle l'action doit être différée et une réponse différée jusqu'à ce qu'un état exécutable soit atteint dans lequel le qualificateur de demandes est disposé pour comparer l'indicateur de temps extrait au temps de dernière modification des données demandées et est disposé pour qualifier une réponse comme une réponse exécutable si l'indicateur de temps indique un temps antérieur au temps de dernière modification des données demandées ;
- un indicateur d'état pour indiquer, pour chaque demande ajournable, quand l'état exécutable est atteint de telle sorte que chaque telle demande ajournable soit requalifiée comme demande exécutable; et
- un indicateur de réponse pour indiquer au serveur pour chaque demande exécutable que chaque telle demande exécutable doit être exécutée et une réponse fournie.

2. Système selon la revendication 1, dans lequel l'analyseur de demandes comprend une mémoire de file d'attente de demandes pour mémoriser les demandes dans leur ordre d'arrivée dans le receveur de demandes.

3. Système selon la revendication 1 ou 2, dans lequel l'analyseur de demandes comprend un dispositif d'extraction de demandes pour extraire des demandes de la mémoire de file d'attente de demandes dans l'ordre d'arrivée dans le receveur de demandes et pour passer les demandes ainsi extraites au qualificateur de demandes.

4. Système selon la revendication 1, 2 ou 3, dans lequel l'analyseur de demandes est disposé pour déterminer si la demande est une lecture ou une écriture de données.

5. Système selon la revendication 4, comprenant en outre un contrôleur pour commander le fonctionnement de l'analyseur de demandes, du qualificateur de demandes, de l'indicateur d'état et de l'indicateur de réponse, et pour suspendre optionnellement le fonctionnement de chacun, si l'analyseur de demandes détermine que la demande suivante est une écriture de données, jusqu'à ce que les données aient été écrites.

6. Système selon la revendication 1, dans lequel l'indicateur de temps est un horodatage.

7. Système selon la revendication 1, dans lequel le qualificateur de demandes est disposé pour qualifier la demande comme ajournable si l'indicateur de temps indique un temps postérieur ou égal au temps de dernière modification des données demandées.

8. Système selon la revendication 1, dans lequel l'indicateur d'état comprend une mémoire de demandes en attente pour mémoriser des demandes ajournables dans l'ordre des indicateurs de temps.

9. Système selon la revendication 8, dans lequel l'indicateur d'état comprend un dispositif d'extraction de demandes en attente pour extraire des demandes de la mémoire de demandes en attente dans l'ordre des indicateurs de temps, le qualificateur étant disposé pour qualifier en comparant le temps de la dernière modification des données demandées à l'indicateur de temps, l'indicateur d'état étant disposé pour indiquer qu'un état exécutable est atteint si l'indicateur de temps indique un temps antérieur au temps de dernière modification des données demandées.

10. Système selon la revendication 9, dans lequel le dispositif d'extraction de demandes en attente est disposé pour extraire périodiquement des demandes de la mémoire de demandes en attente.

11. Système selon la revendication 9 ou 10, dans lequel le dispositif d'extraction de demandes en attente est disposé pour extraire périodiquement des demandes de la mémoire de demandes en attente en réponse à une notification depuis le serveur que les données mémorisées dans le serveur ont changé.

12. Procédé pour traiter des demandes dans un réseau informatique clients-serveur à demande-réponse dans lequel une de pluralité de clients communiquent avec un serveur en émettant des demandes de lecture ou d'écriture de données, comprenant :
- la réception d'une pluralité de demandes des clients au niveau d'un receveur ;
- l'analyse de chacune de la pluralité de demandes passées depuis le receveur de demandes dans un analyseur de demandes en extrayant de chaque demande un indicateur de temps indicatif du temps d'occurrence de la dernière transaction ayant fourni une réponse du serveur au client ;
- la qualification de chaque demande dans un qualificateur de demandes soit comme une demande exécutable pour laquelle une action doit être prise et une réponse émise, soit comme une demande ajournable pour laquelle l'action doit être différée et une réponse différée jusqu'à ce qu'un état exécutable soit atteint en comparant l'indicateur de temps extrait au temps de dernière modification des données demandées et la qualification de la demande comme une demande exécutable si l'indicateur de temps indique un temps antérieur au temps de dernière modification des données demandées ;
- l'indication par un indicateur d'état, pour chaque demande ajournable, quand l'état exécutable est atteint de telle sorte que chaque telle demande ajournable soit requalifiée comme demande exécutable; et
- l'indication au serveur par un indicateur de réponse pour chaque demande exécutable que chaque telle demande exécutable doit être exécutée et une réponse fournie.

13. Procédé selon la revendication 12, dans lequel l'étape d'analyse comprend en outre la mémorisation des demandes dans une mémoire de file d'attente de demandes dans leur ordre d'arrivée dans le receveur de demandes.

14. Procédé selon la revendication 12, ou 13, dans lequel l'étape d'analyse comprend en outre l'extraction de demandes de la mémoire de file d'attente de demande dans l'ordre d'arrivée dans le receveur de demandes et le passage des demandes ainsi extraites au qualificateur de demandes.

15. Procédé selon l'une quelconque des revendications 15, 16 ou 17, dans lequel l'étape d'analyse comprend en outre la détermination si la demande est une lecture ou une écriture de données.

16. Procédé selon la revendication 15, comprenant en outre la commande du fonctionnement de l'analyseur de demandes, du qualificateur de demandes, de l'indicateur d'état et de l'indicateur de réponse, et la suspension optionnelle du fonctionnement de chacun, si l'analyseur de demandes détermine que la demande suivante est une écriture de données, jusqu'à ce que les données aient été écrites.

17. Procédé selon la revendication 12, dans lequel l'indicateur de temps est un horodatage.

18. Procédé selon la revendication 12, dans lequel le qualificateur de demandes qualifie la demande comme demande ajournable si l'indicateur de temps indique un temps postérieur ou égal au temps de dernière modification des données demandées.

19. Procédé selon la revendication 12, comprenant en outre la mémorisation des demandes ajournables dans une mémoire de demandes en attente dans l'ordre des indicateurs de temps.

20. Procédé selon la revendication 19, comprenant en outre l'extraction de demandes de la mémoire de demandes en attente, en comparant l'indicateur de temps des demandes au temps de la dernière modification des données demandées, dans lequel l'état exécutable est atteint si l'indicateur de temps indique un temps antérieur au temps de dernière modification des données demandées.

21. Procédé selon la revendication 20, dans lequel l'étape d'extraction comprend l'extraction périodique de demandes de la mémoire de demandes en attente.

22. Procédé selon la revendication 20 ou 21, dans lequel l'étape d'extraction comprend l'extraction de demandes de la mémoire de demandes en attente en réponse à une notification depuis le serveur que les données mémorisées dans le serveur ont changé.

23. Réseau informatique clients-serveur à demande-réponse comprenant une pluralité de clients et un serveur avec lequel les clients communiquent en émettant des demandes de lecture ou d'écriture de données, comprenant :
au niveau de chaque client :
- une mémoire de données client contenant des données fournies par le serveur ; et
- un dispositif de fourniture de demandes pour émettre des demandes de lecture ou d'écriture de données au serveur ;
au niveau de chaque serveur :
- une mémoire de données serveur contenant une copie maître des données fournies à chaque client ;
- un receveur de demandes pour recevoir une pluralité de demandes des clients ;
- un analyseur de demandes pour analyser une à la fois chacune de la pluralité de demandes passées depuis le receveur de demandes en extrayant de chaque demande un indicateur de temps ;
- un qualificateur de demandes pour qualifier chaque demande reçue soit comme une demande exécutable pour laquelle une action doit être prise et une réponse émise, soit comme une demande ajournable pour laquelle l'action doit être différée et une réponse différée jusqu'à ce qu'un état exécutable soit atteint et disposé pour comparer l'indicateur de temps extrait au temps de dernière modification des données demandées dans la mémoire de données serveur et pour qualifier une demande comme une demande exécutable si l'indicateur de temps indique un temps antérieur au temps de dernière modification des données demandées dans la mémoire de données serveur ;
- un indicateur d'état pour indiquer, pour chaque demande ajournable, quand l'état exécutable est atteint de telle sorte que chaque telle demande ajournable soit requalifiée comme demande exécutable; et
- un indicateur de réponse pour indiquer au serveur pour chaque demande exécutable que chaque telle demande exécutable doit être exécutée et une réponse fournie par le serveur.

24. Réseau selon la revendication 23, dans lequel l'analyseur de demandes comprend une mémoire de file d'attente de demandes pour mémoriser les demandes dans leur ordre d'arrivée dans le receveur de demandes.

25. Réseau selon la revendication 23 ou 24, dans lequel l'analyseur de demandes comprend un dispositif d'extraction de demandes pour extraire des demandes de la mémoire de file d'attente de demandes dans l'ordre d'arrivée dans le receveur de demandes et pour passer les demandes ainsi extraites au qualificateur de demandes.

26. Réseau selon la revendication 23, 24 ou 25, dans lequel l'analyseur de demandes est disposé pour déterminer si la demande est une lecture ou une écriture de données.

27. Réseau selon la revendication 26, comprenant en outre un contrôleur pour commander le fonctionnement de l'analyseur de demandes, du qualificateur de demandes, de l'indicateur d'état et de l'indicateur de réponse, et pour suspendre optionnellement le fonctionnement de chacun, si l'analyseur de demandes détermine que la demande suivante est une écriture de données, jusqu'à ce que les données aient été écrites.

28. Réseau selon l'une quelconque des revendications 23 à 27, dans lequel le dispositif de fourniture de demandes est disposé pour émettre des demandes de lecture de données depuis la mémoire de données serveur, chaque demande comportant un indicateur de temps indicatif du temps d'occurrence de la dernière transaction ayant fourni une réponse du serveur au client.

29. Réseau selon la revendication 23, dans lequel l'indicateur de temps est un horodatage.

30. Réseau selon la revendication 23, dans lequel le qualificateur de demandes est disposé pour qualifier la demande comme ajournable si l'indicateur de temps indique un temps postérieur ou égal au temps de dernière modification des données demandées.

31. Réseau selon la revendication 23, dans lequel l'indicateur d'état comprend une mémoire de demandes en attente pour mémoriser des demandes ajournables dans l'ordre des indicateurs de temps.

32. Réseau selon la revendication 31, dans lequel l'indicateur d'état comprend un dispositif d'extraction de demandes en attente pour extraire périodiquement des demandes de la mémoire de demandes en attente, le qualificateur étant disposé pour qualifier en comparant le temps de la dernière modification des données demandées à l'indicateur de temps, l'indicateur d'état étant disposé pour indiquer qu'un état exécutable est atteint si l'indicateur de temps indique un temps antérieur au temps de dernière modification des données demandées.

33. Réseau selon la revendication 28, dans lequel chaque client est disposé pour émettre de façon répétée des demandes de lecture de données de la mémoire de données serveur et pour écrire les données reçues dans la mémoire de données client.

34. Réseau selon la revendication 33, dans lequel la mémoire de données client et la mémoire de données serveur contiennent des données structurées.

35. Réseau selon la revendication 34, dans lequel les données structurées dans la mémoire de données client forment une base de données client, et l'indicateur de temps est indicatif du temps d'occurrence de la dernière transaction ayant fourni une réponse du serveur au client.

36. Réseau selon la revendication 34 ou 35, dans lequel les données structurées dans la mémoire de données serveur forment une base de données serveur, et chaque partie de la base de données serveur comporte un champ de temps indiquant le temps auquel la partie de données a été modifiée pour la dernière fois.

37. Réseau selon la revendication 33, dans lequel la mémoire de données client et la mémoire de données serveur contiennent des données non structurées.

38. Réseau selon la revendication 33, dans lequel les données non structurées sont une page de données HTML.

39. Produit de programme informatique pour commander un ordinateur dans un réseau informatique clients-serveur à demande-réponse dans lequel une pluralité de clients communiquent avec un serveur en émettant des demandes de lecture ou d'écriture de données, comprenant un support d'enregistrement lisible par l'ordinateur, et un moyen enregistré sur le support d'enregistrement pour ordonner à l'ordinateur de :
- recevoir une pluralité de demandes des clients au niveau d'un receveur ;
- analyser chacune de la pluralité de demandes passées depuis le receveur de demandes dans un analyseur de demandes en extrayant de chaque demande un indicateur de temps indicatif du temps d'occurrence de la dernière transaction ayant fourni une réponse du serveur au client ;
- qualifier chaque demande dans un qualificateur de demandes soit comme une demande exécutable pour laquelle une action doit être prise et une réponse émise, soit comme une demande ajournable pour laquelle l'action doit être différée et une demande ajournable jusqu'à ce qu'un état exécutable soit atteint en comparant l'indicateur de temps extrait au temps de dernière modification des données demandées et dans lequel la demande est une demande exécutable si l'indicateur de temps indique un temps antérieur au temps de dernière modification des données demandées ;
- indiquer par un indicateur d'état, pour chaque demande ajournable, quand l'état exécutable est atteint de telle sorte que chaque telle demande ajournable soit requalifiée comme demande exécutable; et
- indiquer au serveur par un indicateur de réponse pour chaque demande exécutable que chaque telle demande exécutable doit être exécutée et une réponse fournie.

40. Produit de programme informatique selon la revendication 39, dans lequel l'étape d'analyse comprend en outre la mémorisation de demandes dans une mémoire de file d'attente de demandes dans leur ordre d'arrivée dans le receveur de demandes.

41. Produit de programme informatique selon la revendication 39, ou 40, dans lequel l'étape d'analyse comprend en outre l'extraction de demandes de la mémoire de file d'attente de demandes dans l'ordre d'arrivée dans le receveur de demandes et le passage des demandes ainsi extraites au qualificateur de demandes.

42. Produit de programme informatique selon l'une quelconque des revendications 39, 40 ou 41, dans lequel l'étape d'analyse comprend en outre la détermination si la demande est une lecture ou une écriture de données.

43. Produit de programme informatique selon la revendication 42, le moyen comprenant en outre un sous-programme de commande pour commander le fonctionnement de l'analyseur de demandes, du qualificateur de demandes, de l'indicateur d'état et de l'indicateur de réponse avec un contrôleur, et suspendre le fonctionnement de chacun, si l'analyseur de demandes détermine que la demande suivante est une écriture de données, jusqu'à ce que les données aient été écrites.

44. Produit de programme informatique selon la revendication 39, dans lequel l'indicateur de temps est un horodatage.

45. Produit de programme informatique selon la revendication 39, dans lequel le qualificateur de demandes qualifie la demande comme ajournable si l'indicateur de temps indique un temps postérieur au temps de dernière modification des données demandées.

46. Produit de programme informatique selon la revendication 39, comprenant en outre la mémorisation des demandes ajournables dans une mémoire de demandes en attente dans l'ordre des indicateurs de temps.

47. Produit de programme informatique selon la revendication 46, comprenant en outre l'extraction périodique de demandes de la mémoire de demandes en attente, en comparant l'indicateur de temps des demandes au temps de dernière modification des données demandées, dans lequel l'état exécutable est atteint si l'indicateur de temps indique un temps antérieur au temps de dernière modification des données demandées.

48. Système selon l'une quelconque des revendications 1 à 11, dans lequel les demandes et réponses sont des demandes et réponses HTTP.

49. Procédé selon l'une quelconque des revendications 12 à 22, dans lequel les demandes et réponses sont des demandes et réponses HTTP.

50. Réseau selon l'une quelconque des revendications 23 à 38, dans lequel les demandes et réponses sont des demandes et réponses HTTP.

51. Produit de programme informatique selon l'une quelconque des revendications 39 à 47, dans lequel les demandes et réponses sont des demandes et réponses HTTP.
